# EUROPEAN PATENT SPECIFICATION

(11) **EP 4 024 765 B1**
(45) Date of publication and mention of the grant of the patent: **22.11.2023**
(21) Application number: 20865768.4
(22) Date of filing: 16.09.2020
(51) Int. Cl.: G06F 16/901, H04L 41/0631, H04L 41/0677, H04L 41/16

(54) **METHOD AND APPARATUS FOR EXTRACTING FAULT PROPAGATION CONDITION, AND STORAGE MEDIUM**
VERFAHREN UND VORRICHTUNG ZUR EXTRAKTION VON FEHLERAUSBREITUNGSZUSTÄNDEN UND SPEICHERMEDIUM
PROCÉDÉ ET APPAREIL D'EXTRACTION DE CONDITION DE PROPAGATION DE DÉFAUT, ET SUPPORT D'INFORMATIONS

(30) Priority: 17.09.2019 CN 201910877916
(43) Date of publication of application: 06.07.2022
(73) Proprietor: Huawei Technologies Co., Ltd., Longgang District Shenzhen, Guangdong 518129 (CN)
(72) Inventor: XIAO, Xin, Shenzhen, Guangdong 518129 (CN); XIE, Yuming, Shenzhen, Guangdong 518129 (CN); WANG, Zhongyu, Shenzhen, Guangdong 518129 (CN); GAO, Yunpeng, Shenzhen, Guangdong 518129 (CN); MA, Kai, Shenzhen, Guangdong 518129 (CN)
(74) Representative: Gill Jennings & Every LLP
(86) International application number: PCT/CN2020/115701
(87) International publication number: WO 2021/052380

(56) References cited:
- CN-A- 104 794 013
- CN-A- 108 320 040
- CN-A- 108 322 320
- CN-A- 108 964 960
- CN-A- 109 684 181
- US-A1- 2017 060 663
- US-A1- 2018 103 052

## Description

### TECHNICAL FIELD

This application relates to the field of communications technologies, further, to application of artificial intelligence (AI) in the field of the communications technologies, and in particular, to a fault propagation condition extraction method and apparatus, and a storage medium.

### BACKGROUND

As complexity of a communications network system increases, operation and maintenance costs caused by fault locating of a communications network continuously increase. For example, in a data center network, reasons of faults such as device restart and a router identity (ID) conflict are very complex, and operation and maintenance costs caused by locating these faults continuously increase. To reduce the operation and maintenance costs, a fault propagation condition usually needs to be extracted, and the faults are located by using the fault propagation condition.

In a related technology, the fault propagation condition is usually manually summarized, and may also be referred to as a fault determining rule. Then, the faults may be located based on the fault propagation condition summarized manually. However, in actual implementation, the fault propagation condition can be usually manually summarized for only a type of fault. The related technology has a low fault coverage rate, is time-consuming, laborious, unreproducible and inextensible, and cannot be widely applied.

US 2017/060663 A1 describes a method for clustering events. Messages are received at an extraction engine from managed infrastructure that includes managed infrastructure physical hardware that supports the flow and processing of information. Events are produced that relate to the managed infrastructure. Membership in a cluster indicates a common factor of the events that is a failure or an actionable problem in the physical hardware managed infrastructure directed to supporting the flow and processing of information. In response to production of the clusters one or more physical changes are made in the managed infrastructure hardware.

CN 108 322 320 A describes a service survivability analysis method and device and relates to the technical field of communications, wherein time duration of service survivability analysis can be reduced, and efficiency of the service survivability analysis is improved.

### SUMMARY

This application provides a fault propagation condition extraction method and apparatus, and a storage medium, to resolve a problem that a related technology has a low fault coverage rate, is time-consuming, laborious, unreproducible and inextensible, and cannot be widely applied. Technical solutions are as follows:

According to a first aspect, there is provided a fault propagation condition extraction method, according to claim 1 appended herein.

A network device obtains, at different time, a plurality of event-object connection graphs corresponding to a communications network. The different time is in a one-to-one correspondence with the plurality of event-object connection graphs, and each of the plurality of event-object connection graphs is used to describe a fault-related event that occurs in the communications network and a connection relationship between objects related to the event.

The network device determines a plurality of subgraphs based on the plurality of event-object connection graphs. The plurality of subgraphs are in a one-to-one correspondence with the plurality of event-object connection graphs, and each of the plurality of subgraphs is a subset of a corresponding event-object connection graph. A quantity of hops between an object that generates a first event in each of the plurality of subgraphs and any object related to the first event is not greater than N, the event includes the first event, and N is an integer greater than or equal to 1.

The network device updates an object in each of the plurality of subgraphs to a corresponding object type based on a correspondence between an object and an object type, to obtain a plurality of updated subgraphs. The plurality of updated subgraphs are in a one-to-one correspondence with the plurality of subgraphs.

The network device determines a fault propagation condition based on the plurality of updated subgraphs. The fault propagation condition is used to indicate a path through which a fault is propagated in the communications network.

It should be noted that the different time may be a plurality of different moments, or may be a plurality of different time periods. Certainly, the different time may alternatively include both a moment and a time period. To be specific, the plurality of event-object connection graphs may all be event-object connection graphs corresponding to different moments, or may all be event-object connection graphs corresponding to different time periods. Alternatively, some of the plurality of event-object connection graphs may be event-object connection graphs corresponding to different moments, and others of the plurality of event-object connection graphs are event-object connection graphs corresponding to different time periods.

In addition, in this embodiment of this application, the event-object connection graph may be represented in a form of a graph, or may be represented in another form, for example, may be represented in a form of an entry. A representation form of the event-object connection graph is not limited in this embodiment of this application.

It should be noted that a quantity of fault propagation conditions extracted by the network device based on a frequent subgraph mining algorithm from an updated subgraph included in a subgraph set may be 0 or 1, or certainly, may be greater than 1. Moreover, no fault propagation condition may be extracted from some updated subgraphs, one or more fault propagation conditions may be extracted from some updated subgraphs, and a same fault propagation condition may also be extracted from two or more updated subgraphs.

Optionally, that the network device determines a fault propagation condition based on the plurality of updated subgraphs includes:
The network device separately converts the plurality of updated subgraphs into graph embedding vectors based on a graph embedding algorithm, to obtain a plurality of graph embedding vectors that are in a one-to-one correspondence with the plurality of updated subgraphs.

The network device determines a plurality of subgraph sets based on the plurality of graph embedding vectors and a clustering algorithm. Each of the plurality of subgraph sets includes at least one of the plurality of updated subgraphs.

The network device extracts, based on the frequent subgraph mining algorithm, the fault propagation condition from the updated subgraph included in each of the plurality of subgraph sets.

Optionally, that the network device determines a plurality of subgraph sets based on the plurality of graph embedding vectors and a clustering algorithm includes:

The network device determines a similarity between every two of the plurality of graph embedding vectors.

The network device clusters the plurality of updated subgraphs based on the similarity and the clustering algorithm, to obtain the plurality of subgraph sets.

Because the graph embedding vector may represent the updated subgraph, the network device may cluster the plurality of updated subgraphs based on the similarity between every two of the plurality of graph embedding vectors and the clustering algorithm, to obtain the plurality of subgraph sets.

Optionally, that the network device determines a fault propagation condition based on the plurality of updated subgraphs includes:
The network device extracts the fault propagation condition from the plurality of updated subgraphs based on the frequent subgraph mining algorithm.

Optionally, after the network device determines the fault propagation condition based on the plurality of updated subgraphs, the method further includes:
The network device determines fault propagation time corresponding to the fault propagation condition.

The method further includes:
The network device filters a fault propagation condition that meets a condition from the fault propagation condition based on an object on which a fault alarm currently occurs, an updated subgraph of the communications network at current time, and the fault propagation time corresponding to the fault propagation condition.

When a quantity of the fault propagation conditions that meet the condition is 1, the network device determines a start point of the fault propagation condition that meets the condition as a fault source of the current fault alarm.

Optionally, that the network device determines fault propagation time corresponding to the fault propagation condition includes:
The network device determines alarm occurrence time at a start point and alarm occurrence time at an end point of a first fault propagation condition. The first fault propagation condition is a fault propagation condition extracted from a first subgraph set, and the plurality of subgraph sets include the first subgraph set.

The network device determines a difference between the alarm occurrence time at the start point and the alarm occurrence time at the end point of the first fault propagation condition as fault propagation time corresponding to the first fault propagation condition.

Optionally, that the network device filters a fault propagation condition that meets a condition from the fault propagation condition based on an object on which a fault alarm currently occurs, an updated subgraph of the communications network at current time, and the fault propagation time corresponding to the fault propagation condition includes:
The network device selects, from the fault propagation condition, a second fault propagation condition whose end point is the object on which the fault alarm currently occurs and that can match the updated subgraph of the communications network at the current time.

The network device selects, from the second fault propagation condition based on the updated subgraph of the communications network at the current time, a third fault propagation condition with a start point at which a fault alarm occurs before the current time.

The network device determines, based on the updated subgraph of the communications network at the current time, current alarm propagation time corresponding to the third fault propagation condition. The current alarm propagation time is a difference between alarm occurrence time at the start point of the third fault propagation condition and alarm occurrence time of the current fault alarm, and the alarm occurrence time at the start point of the third fault propagation condition is determined from the updated subgraph of the communications network at the current time.

The network device selects, from the third fault propagation condition, a fault propagation condition in which a difference between the corresponding current alarm propagation time and the fault propagation time is less than a time threshold, and uses the selected fault propagation condition as the fault propagation condition that meets the condition.

When the difference between the current alarm propagation time corresponding to the third fault propagation condition and the fault propagation time is less than the time threshold, it may indicate that there is a relatively high probability that the current fault alarm is the same as the fault alarm corresponding to the third fault propagation condition. Therefore, the selected fault propagation condition may be used as the fault propagation condition that meets the condition.

Optionally, the method further includes:
The network device determines an occurrence probability of the fault propagation condition.

When a quantity of the fault propagation conditions that meet the condition is greater than 1, the network device determines a start point of a fault propagation condition that has a highest occurrence probability in the fault propagation conditions that meet the condition as a fault source of the current fault alarm.

Each fault propagation condition corresponds to one probability, and generally, there is only one fault source. Therefore, when the quantity of the fault propagation conditions that meet the condition is greater than 1, the fault propagation condition that has the highest probability may be selected from the fault propagation conditions that meet the condition, and the start point of the fault propagation condition that has the highest probability may be determined as the fault source of the current fault alarm.

Optionally, the fault propagation condition is extracted by the network device based on the frequent subgraph mining algorithm from the updated subgraph included in each of the plurality of subgraph sets.

That the network device determines an occurrence probability of the fault propagation condition includes:
The network device determines a quantity of updated subgraphs in which a first fault propagation condition occurs in a first subgraph set. The first fault propagation condition is a fault propagation condition extracted from the first subgraph set, and the plurality of subgraph sets include the first subgraph set.

The network device determines an occurrence probability of the first fault propagation condition based on a ratio of the quantity to a total quantity of updated subgraphs in the first subgraph set.

Optionally, that the network device determines an occurrence probability of the fault propagation condition includes:
The network device determines a quantity of times that a first fault propagation condition occurs in the plurality of updated subgraphs, to obtain a first quantity of times. The fault propagation condition includes the first fault propagation condition.

The network device determines a quantity of times that a connection relationship between a start point of the first fault propagation condition and a second event occurs in the plurality of updated subgraphs, to obtain a second quantity of times. The event includes the second event, and the second event is an event corresponding to the first fault propagation condition.

The network device determines an occurrence probability of the first fault propagation condition based on a ratio of the first quantity of times to the second quantity of times.

In the foregoing content, the fault propagation condition that meets the condition is first determined based on the fault propagation time, and then the fault source of the current fault alarm is determined based on the probability. Certainly, the fault propagation condition that meets the condition may alternatively be first determined based on the probability, and then the fault source of the current fault alarm is determined based on the fault propagation time.

To be specific, the network device selects, from the extracted fault propagation condition, the second fault propagation condition whose end point is the object on which the fault alarm currently occurs and that can match the updated subgraph of the communications network at the current time; selects, from the second fault propagation condition based on the updated subgraph of the communications network at the current time, the third fault propagation condition with the start point at which the fault alarm occurs before the current time; and selects a fault propagation condition whose probability is greater than a probability threshold from the third fault propagation condition, and uses the selected fault propagation condition as the fault propagation condition that meets the condition. When the quantity of the fault propagation conditions that meet the condition is 1, the network device determines the start point of the fault propagation condition that meets the condition as the fault source of the current fault alarm. When the quantity of the fault propagation conditions that meet the condition is greater than 1, the network device determines, based on the updated subgraph of the communications network at the current time, the current alarm propagation time corresponding to the fault propagation condition that meets the condition; and determines a start point of a fault propagation condition in which a difference between the corresponding current alarm propagation time and the fault propagation time is smallest in the fault propagation conditions that meet the condition as the fault source of the current fault alarm.

Regardless of whether the fault source of the current fault alarm is first determined based on the fault propagation time and then based on the probability or the fault source of the current fault alarm is first determined based on the probability and then based on the fault propagation time, after extracting the fault propagation condition, the network device needs to determine both the occurrence probability and the corresponding fault propagation time of the fault propagation condition. However, the network device may alternatively determine only the fault propagation time corresponding to the fault propagation condition, or determine only the occurrence probability of the fault propagation condition. In this case, the network device may determine the fault source of the current fault alarm only based on the fault propagation time, or determine the fault source of the current fault alarm only based on the probability.

An implementation process in which the network device determines the fault source of the current fault alarm only based on the fault propagation time may be: The second fault propagation condition whose end point is the object on which the fault alarm currently occurs and that can match the updated subgraph of the communications network at the current time is selected from the extracted fault propagation condition. The third fault propagation condition with the start point at which the fault alarm occurs before the current time is selected from the second fault propagation condition based on the updated subgraph of the communications network at the current time. The current alarm propagation time corresponding to the third fault propagation condition is determined based on the updated subgraph of the communications network at the current time. The fault propagation condition in which the difference between the corresponding current alarm propagation time and the fault propagation time is less than the time threshold is selected from the third fault propagation condition, and the selected fault propagation condition is used as the fault propagation condition that meets the condition. When the quantity of the fault propagation conditions that meet the condition is 1, the network device determines the start point of the fault propagation condition that meets the condition as the fault source of the current fault alarm. When the quantity of the fault propagation conditions that meet the condition is greater than 1, the network device determines the start point of the fault propagation condition in which the difference between the corresponding current alarm propagation time and the fault propagation time is smallest in the fault propagation conditions that meet the condition as the fault source of the current fault alarm.

An implementation process in which the network device determines the fault source of the current fault alarm only based on the probability may be: The second fault propagation condition whose end point is the object on which the fault alarm currently occurs and that can match the updated subgraph of the communications network at the current time is selected from the extracted fault propagation condition. The third fault propagation condition with the start point at which the fault alarm occurs before the current time is selected from the second fault propagation condition based on the updated subgraph of the communications network at the current time. The current alarm propagation time corresponding to the third fault propagation condition is determined based on the updated subgraph of the communications network at the current time. A fault propagation condition whose probability is greater than a probability threshold is selected from the third fault propagation condition, and the selected fault propagation condition is used as the fault propagation condition that meets the condition. When the quantity of the fault propagation conditions that meet the condition is 1, the network device determines the start point of the fault propagation condition that meets the condition as the fault source of the current fault alarm. When the quantity of the fault propagation conditions that meet the condition is greater than 1, the network device determines the start point of the fault propagation condition that has the highest probability in the fault propagation conditions that meet the condition as the fault source of the current fault alarm.

Optionally, after the network device determines the fault propagation condition based on the plurality of updated subgraphs, the method further includes:
The network device predicts a fault-affected object based on the object on which the fault alarm currently occurs, the updated subgraph of the communications network at the current time, and the fault propagation condition. The fault-affected object is an object on which a fault alarm occurs due to impact of the current fault alarm.

Optionally, that the network device predicts a fault-affected object based on the object on which the fault alarm currently occurs and the fault propagation condition includes:
The network device selects, from the fault propagation condition, a fourth fault propagation condition whose start point is the object on which the fault alarm currently occurs and that can match the updated subgraph of the communications network at the current time.

The network device determines an end point of the fourth fault propagation condition as the fault-affected object.

Optionally, the method further includes:
The network device determines the fault propagation time corresponding to the fault propagation condition.

The network device predicts, based on fault propagation time corresponding to the fourth fault propagation condition and the alarm occurrence time of the current fault alarm, time at which the fault alarm occurs on the fault-affected object.

According to a second aspect, there is provided a fault propagation condition extraction apparatus, according to claim 11 as appended herein.
According to a third aspect, there is provided a network device, according to claim 12 as appended herein.

The technical solutions provided in this application may bring at least the following beneficial effects: In this application, the network device may extract the fault propagation condition by using the plurality of event-object connection graphs that are in the one-to-one correspondence with the different time, without manually summarizing the fault propagation condition, so that labor costs can be reduced, and efficiency of extracting the fault propagation condition can be improved. Moreover, faults that occur in the communications network at the different time may basically cover all fault types. Therefore, it is ensured that the extracted fault propagation condition has a relatively high fault coverage rate, and the method is reproducible and extensible, and can be widely applied.

### BRIEF DESCRIPTION OF DRAWINGS

FIG. 1 is an architectural diagram of a data center network according to an embodiment of this application;
FIG. 2 is a diagram of a fault propagation condition extraction system architecture according to an embodiment of this application;
FIG. 3 is a schematic diagram of a structure of a computer device according to an embodiment of this application;
FIG. 4 is a flowchart of a fault propagation condition extraction method according to an embodiment of this application;
FIG. 5 is a schematic diagram in which a quantity of hops between objects is 1 according to an embodiment of this application;
FIG. 6 is a schematic diagram in which a quantity of hops between objects is 2 according to an embodiment of this application;
FIG. 7 is a schematic diagram of an updated subgraph according to an embodiment of this application;
FIG. 8 is a flowchart of a fault source determining method according to an embodiment of this application;
FIG. 9 is a flowchart of a fault propagation range prediction method according to an embodiment of this application; and
FIG. 10 is a schematic diagram of a structure of a fault propagation condition extraction apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

The method provided in the embodiments of this application may be applied to various communications networks, for example, a data center network and a mobile communications network. Devices in these communications networks may be connected to a network device, and then a fault propagation condition that can be used to locate faults occurring in these communications networks is extracted by using the network device. In other words, the network device configured to extract the fault propagation condition may be a device independent of the communications network. Certainly, the network device configured to extract the fault propagation condition may alternatively be the device in the communications network, that is, the device in the communications network may also extract the fault propagation condition that can be used to locate the fault occurring in the communications network.

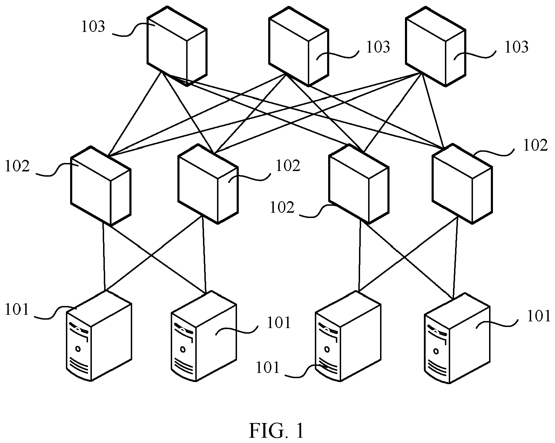

FIG. 1 is an architectural diagram of a data center network according to an embodiment of this application. The data center network includes a plurality of computer nodes 101, a plurality of tunnel endpoints 102, and a plurality of intermediate nodes 103. A communication connection is established between one computer node 101 and one tunnel endpoint 102, and a communication connection is established between each tunnel endpoint 102 and each intermediate node 103. Optionally, to improve communication reliability between the computer node 101 and the tunnel endpoint 102, one computer node 101 may alternatively establish communication connections to two or more tunnel endpoints 102. In this case, the two or more tunnel endpoints 102 may be backup nodes for each other. The plurality of computer nodes 101 may be servers, firewalls, load balancers, or the like. The server may be a virtual machine, or may be a bare machine, namely, a machine that does not include an operating system.

For the data center network shown in FIG. 1, the tunnel endpoint 102 or the intermediate node 103 may be used as a network device for extracting a fault propagation condition. To be specific, the tunnel endpoint 102 or the intermediate node 103 may obtain events that occur in the data center network and a connection relationship between objects related to these events, and then, generate an event-object connection graph, to extract the fault propagation condition. For example, when a structure of the data center network is a spine-leaf structure, the tunnel endpoint 102 may be a leaf node, and the intermediate node 103 may be a spine node. To be specific, the leaf node and the spine node each may be used as the network device for extracting the fault propagation condition.

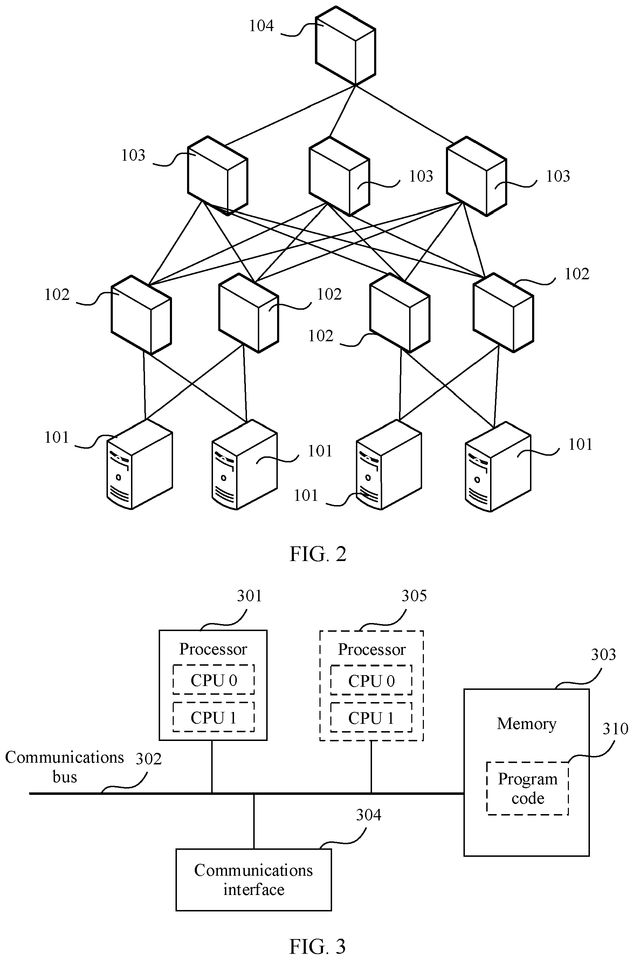

Optionally, refer to FIG. 2. The data center network is further connected to a network device 104. In some embodiments, the network device 104 may establish communication connections to each computer node 101, each tunnel endpoint 102, and each intermediate node 103. In some other embodiments, because the communication connection is established between the computer node 101, the tunnel endpoint 102, and the intermediate node 103, the network device 104 may establish the communication connection only to the intermediate node 103. In FIG. 2, an example in which the network device 104 establishes the communication connection to the intermediate node 103 is used. In this case, the network device 104 may obtain, by interacting with the connected device, the events that occur in the data center network and the connection relationship between the objects related to these events, and then, generate the event-object connection graph, to extract the fault propagation condition.

It should be noted that, because data transmission in the data center network is implemented through a tunnel, the tunnel endpoint 102 may be an ingress endpoint of the tunnel, or may be an egress endpoint of the tunnel, and the intermediate node 103 may be a network node through which the tunnel passes.

FIG. 3 is a schematic diagram of a structure of a computer device according to an embodiment of this application. The computer device may be any device in content described in FIG. 1 and FIG. 2, for example, the computer node 101, the tunnel endpoint 102, the intermediate node 103, the network device 104, or the like. The computer device includes at least one processor 301, a communications bus 302, a memory 303, and at least one communications interface 304.

The processor 301 may be a general-purpose central processing unit (CPU), a network processor (NP), or a microprocessor, or may be one or more integrated circuits configured to implement the solutions of this application, for example, an application-specific integrated circuit (ASIC), a programmable logic device (PLD), or a combination thereof. The PLD may be a complex programmable logic device (CPLD), a field-programmable gate array (FPGA), a generic array logic (GAL), or any combination thereof.

The communications bus 302 is configured to transmit information between the foregoing components. The communications bus 302 may be classified into an address bus, a data bus, a control bus, and the like. For ease of representation, only one thick line is used to represent the bus in the figure, but it does not mean that there is only one bus or only one type of bus.

The memory 303 may be a read-only memory (ROM) or another type of static storage device that can store static information and instructions, or a random access memory (RAM) or another type of dynamic storage device that can store information and instructions. Alternatively, the memory 303 may be an electrically erasable programmable read-only memory (EEPROM), a compact disc read-only memory (CD-ROM) or another compact disc storage, an optical disc storage (including a compact optical disc, a laser disc, an optical disc, a digital versatile disc, a Blu-ray disc, and the like), a magnetic disk storage medium or another magnetic storage device, or any other medium that can be configured to carry or store expected program code in a form of an instruction or a data structure and that can be accessed by a computer. However, the memory 303 is not limited thereto. The memory 303 may exist independently, and be connected to the processor 301 through the communications bus 302. Alternatively, the memory 303 may be integrated with the processor 301.

The communications interface 304 is configured to communicate with another device or a communications network by using any apparatus such as a transceiver. The communications interface 304 includes a wired communications interface, and may further include a wireless communications interface. The wired communications interface may be, for example, an Ethernet interface. The Ethernet interface may be an optical interface, an electrical interface, or a combination thereof. The wireless communications interface may be a wireless local area network (WLAN) interface, a cellular network communications interface, a combination thereof, or the like.

In a specific implementation, in an embodiment, the processor 301 may include one or more CPUs, for example, a CPU 0 and a CPU 1 shown in FIG. 3.

In a specific implementation, in an embodiment, the computer device may include a plurality of processors, for example, the processor 301 and a processor 305 shown in FIG. 3. Each of the processors may be a single-core processor (single-CPU) or a multi-core processor (multi-CPU). The processor herein may refer to one or more devices, circuits, and/or processing cores configured to process data (for example, computer program instructions).

In a specific implementation, in an embodiment, the computer device may further include an output device 306 and an input device 307. The output device 306 communicates with the processor 301, and may display information in a plurality of manners. For example, the output device 306 may be a liquid crystal display (LCD), a light-emitting diode (LED) display device, a cathode ray tube (CRT) display device, or a projector. The input device 307 communicates with the processor 301, and may receive a user input in a plurality of manners. For example, the input device 307 may be a mouse, a keyboard, a touchscreen device, or a sensor device.

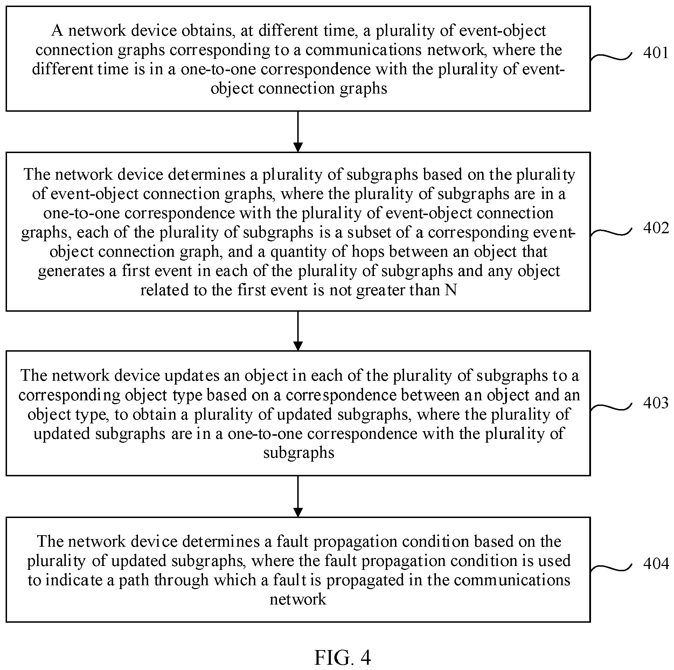

In some embodiments, the memory 303 is configured to store program code 310 for executing the solutions in this application, and the processor 301 may execute the program code 310 stored in the memory 303. To be specific, the computer device may implement, by using the processor 301 and the program code 310 in the memory 303, a method provided in the following embodiments in FIG. 4, FIG. 5, and FIG. 6.

FIG. 4 is a flowchart of a fault propagation condition extraction method according to an embodiment of this application. The method includes the following several steps.

Step 401: A network device obtains, at different time, a plurality of event-object connection graphs corresponding to a communications network, where the different time is in a one-to-one correspondence with the plurality of event-object connection graphs, and each of the plurality of event-object connection graphs is used to describe a fault-related event that occurs in the communications network and a connection relationship between objects related to the event.

Different types of faults often occur in the communications network, and different faults may be caused by different reasons. For example, some faults are caused by a hardware reason of a physical device, and some faults are caused by a protocol deployed on the physical device. Therefore, when the fault-related event occurs in the communications network, the objects related to the event may be physical nodes such as the physical device, a board, and a physical port, or may be logical nodes related to protocols such as open shortest path first (OSPF) and a border gateway protocol (BGP), or may be virtual nodes such as an L3link, an alarm, and a log. In addition, different faults may occur in the communications network at different time. When the different faults occur, events related to the faults are different, and objects related to the events are also different. Therefore, an event-object connection graph of the communications network may change with time. In this case, the plurality of event-object connection graphs corresponding to the communications network may be obtained at the different time.

In some embodiments, the network device may obtain a fault alarm that occurs in the communications network and a log in a running process of the communications network, extract the fault-related event and the objects related to the event from the log, and then generate the event-object connection graph based on the extracted event and the relationship between the objects related to the event. For a specific implementation process, refer to a related technology.

It should be noted that the different time may be a plurality of different moments, or may be a plurality of different time periods. Certainly, the different time may alternatively include both a moment and a time period. To be specific, the plurality of event-object connection graphs may all be event-object connection graphs corresponding to different moments, or may all be event-object connection graphs corresponding to different time periods. Alternatively, some of the plurality of event-object connection graphs may be event-object connection graphs corresponding to different moments, and others of the plurality of event-object connection graphs are event-object connection graphs corresponding to different time periods.

In addition, in this embodiment of this application, the event-object connection graph may be represented in a form of a graph, or may be represented in another form, for example, may be represented in a form of an entry. A representation form of the event-object connection graph is not limited in this embodiment of this application.

Step 402: The network device determines a plurality of subgraphs based on the plurality of event-object connection graphs, where the plurality of subgraphs are in a one-to-one correspondence with the plurality of event-object connection graphs, each of the plurality of subgraphs is a subset of a corresponding event-object connection graph, a quantity of hops between an object that generates a first event in each of the plurality of subgraphs and any object related to the first event is not greater than N, the fault-related event includes the first event, and N is an integer greater than or equal to 1.

In some embodiments, for each of the plurality of event-object connection graphs, the network device may obtain, from the event-object connection graph, a connection relationship in which the quantity of hops between the object that generates the first event and any object related to the first event is less than or equal to N. Because the first event is any fault-related event, after a connection relationship in which a quantity of hops between an object generating each event and any object related to each event is less than or equal to N is obtained, a subgraph corresponding to the event-object connection graph may be obtained.

In some other embodiments, for each of the plurality of event-object connection graphs, the network device may obtain, from the event-object connection graph, a connection relationship in which the quantity of hops between the object that generates the first event and any object related to the first event is equal to N. Because the first event is any fault-related event, after a connection relationship in which a quantity of hops between an object generating each event and any object related to each event is equal to N is obtained, a subgraph corresponding to the event-object connection graph may be obtained.

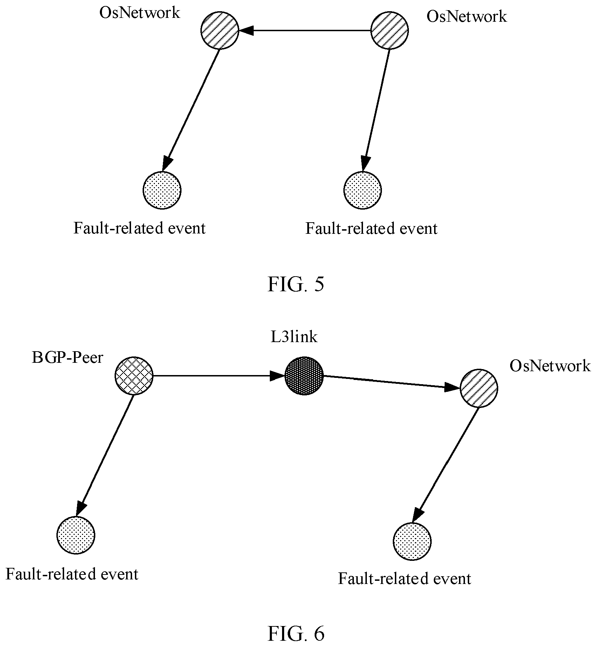

It should be noted that, in each of the plurality of subgraphs, a path connected to two objects that generate the fault-related event does not include an object on which the fault alarm occurs. For example, as shown in FIG. 5, the two objects that generate the fault-related event are both OsNetworks. A path connected to the two objects does not include the object on which the fault alarm occurs. To be specific, the path connected to the two objects does not include the fault-related event. Moreover, the two objects are directly connected, and therefore, a quantity of hops between the two objects is equal to 1. As shown in FIG. 6, the two objects that generate the fault-related event are a BGP peer and an OsNetwork. A path connected to the two objects does not include the object on which the fault alarm occurs. To be specific, the path connected to the two objects does not include the fault-related event. Moreover, the two objects are connected through an L3link. Therefore, a quantity of hops between the two objects is equal to 2.

Step 403: The network device updates an object in each of the plurality of subgraphs to a corresponding object type based on a correspondence between an object and an object type, to obtain a plurality of updated subgraphs, where the plurality of updated subgraphs are in a one-to-one correspondence with the plurality of subgraphs.

In some embodiments, for each of the plurality of subgraphs, the network device obtains, from the correspondence between an object and an object type, the object type corresponding to the object in the subgraph, and replaces the object in the subgraph with the corresponding object type, to obtain an updated subgraph.

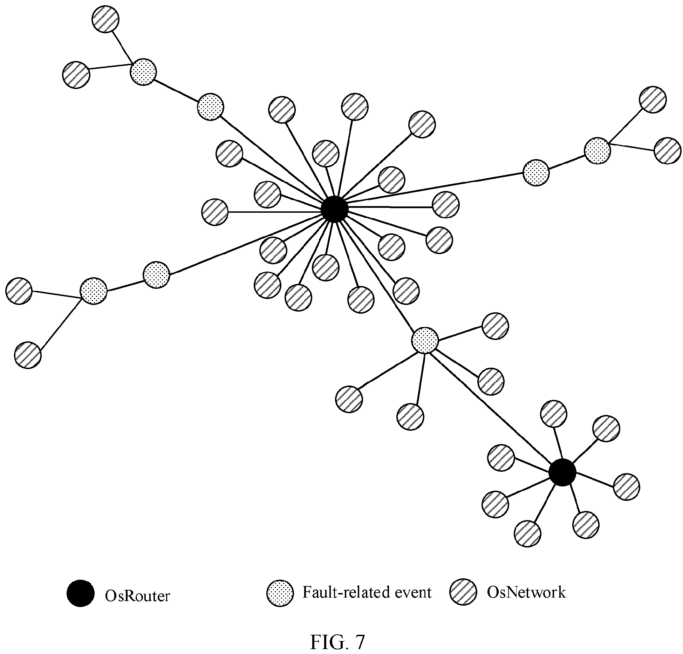

For example, the correspondence between an object and an object type may be shown in the following Table 1. After an object in a subgraph is updated to a corresponding object type by using the following Table 1, an updated subgraph shown in FIG. 7 may be obtained.

**Table 1**

| Object | Object type |
|---|---|
| Alarm, log | Alarm |
| OSPF network segment | OsNetwork |
| OSPF router | OsRouter |
| BGP peer | BGP peer |
| VXLAN tunnel table | Tunnel |
| ... | ... |

It should be noted that Table 1 is an example correspondence provided in this embodiment of this application, and the correspondence shown in Table 1 constitutes no limitation on this embodiment of this application.

Step 404: The network device determines a fault propagation condition based on the plurality of updated subgraphs, where the fault propagation condition is used to indicate a path through which a fault is propagated in the communications network.

The network device separately converts the plurality of updated subgraphs into graph embedding vectors based on a graph embedding algorithm, to obtain a plurality of graph embedding vectors that are in a one-to-one correspondence with the plurality of updated subgraphs; determine a plurality of subgraph sets based on the plurality of graph embedding vectors and a clustering algorithm, where each of the plurality of subgraph sets includes at least one of the plurality of updated subgraphs; and extract, based on a frequent subgraph mining algorithm, the fault propagation condition from the updated subgraph included in each of the plurality of subgraph sets.

In an example, an implementation process in which the network device determines the plurality of subgraph sets based on the plurality of graph embedding vectors and the clustering algorithm may be: determining a similarity between every two of the plurality of graph embedding vectors; and clustering the plurality of updated subgraphs based on the similarity and the clustering algorithm, to obtain the plurality of subgraph sets.

Because the graph embedding vector may represent the updated subgraph, the network device may cluster the plurality of updated subgraphs based on the similarity between every two of the plurality of graph embedding vectors and the clustering algorithm, to obtain the plurality of subgraph sets.

In some other embodiments, the network device may extract the fault propagation condition from the plurality of updated subgraphs based on the frequent subgraph mining algorithm. To be specific, the network device does not need to convert the updated subgraphs into the graph embedding vectors or cluster the updated subgraphs, but directly extracts the fault propagation condition from the plurality of updated subgraphs based on the frequent subgraph mining algorithm. Certainly, the frequent subgraph mining algorithm is used as an example for description in this embodiment of this application. Alternatively, the network device may extract the fault propagation condition from the plurality of updated subgraphs based on other algorithms, which are not enumerated one by one in this embodiment of this application.

It should be noted that a quantity of fault propagation conditions extracted by the network device based on the frequent subgraph mining algorithm may be 0 or 1, or certainly, may be greater than 1. Moreover, no fault propagation condition may be extracted from some updated subgraphs, one or more fault propagation conditions may be extracted from some updated subgraphs, and a same fault propagation condition may also be extracted from two or more updated subgraphs.

It should be noted that the graph embedding algorithm may be an algorithm, for example, graph2vec or a graph neural network (GNN), the clustering algorithm may be an algorithm, for example, Kmeans or AP, and the frequent subgraph mining algorithm may be an algorithm, for example, gSpan or CloseGraph. This is not limited in this embodiment of this application.

In addition, the fault propagation condition may be expressed in a form of text or in a form of a graph. For example, for a fault propagation condition "OsNetwork-L3link-BGPpeer" in a text form, the fault propagation condition is used to indicate that an IP address of a BGP loopback interface is unreachable (L3link) due to a neighbor protocol status fault in an OSPF network segment (OsNetwork), and finally, a BGP peer is disconnected (BGP Peer).

Further, after determining the fault propagation condition based on the plurality of updated subgraphs, the network device may further determine an occurrence probability and/or fault propagation time of the extracted fault propagation condition. In other words, the network device may determine the occurrence probability of the extracted fault propagation condition, or determine the fault propagation time corresponding to the extracted fault propagation condition, or may determine the occurrence probability and the corresponding fault propagation time of the extracted fault propagation condition.

In some embodiments, an implementation process in which the network device determines the fault propagation time corresponding to the extracted fault propagation condition may be: The network device determines alarm occurrence time at a start point and alarm occurrence time at an end point of a first fault propagation condition, where the first fault propagation condition is a fault propagation condition extracted from a first subgraph set, and the plurality of subgraph sets include the first subgraph set. The network device determines a difference between the alarm occurrence time at the start point and the alarm occurrence time at the end point of the first fault propagation condition as fault propagation time corresponding to the first fault propagation condition.

Based on the foregoing description, the event-object connection graph includes the fault-related event, the fault-related event generates a fault alarm, and the fault alarm generally has alarm occurrence time. In this embodiment of this application, the fault-related event in the event-object connection graph may carry the alarm occurrence time, and then, the updated subgraph may carry the alarm occurrence time. Therefore, an implementation process in which the network device determines the alarm occurrence time at the start point and the alarm occurrence time at the end point of the first fault propagation condition may be: An updated subgraph in which the first fault propagation condition occurs is determined from the first subgraph set, and alarm occurrence time carried in an event connected to the start point and alarm occurrence time carried in an event connected to the end point of the first fault propagation condition are obtained from the determined updated subgraph. An average value of the alarm occurrence time carried in the events connected to these start points is determined as the alarm occurrence time at the start point of the first fault propagation condition, and an average value of the alarm occurrence time carried in the events connected to these end points is determined as the alarm occurrence time at the end point of the first fault propagation condition.

Certainly, the network device may alternatively determine, from the first subgraph set, an updated subgraph in which the first fault propagation condition occurs; obtain, from the determined updated subgraph, alarm occurrence time carried in an event connected to the start point and alarm occurrence time carried in an event connected to the end point of the first fault propagation condition; determine a difference between the obtained alarm occurrence time carried in the event connected to the start point and the obtained alarm occurrence time carried in the event connected to the end point of the first fault propagation condition; and determine an average value of the determined differences as the fault propagation time corresponding to the first fault propagation condition.

The first subgraph set is one of the plurality of subgraph sets, and the first fault propagation condition is a fault propagation condition extracted from the first subgraph set. Therefore, fault propagation time corresponding to each fault propagation condition extracted from each subgraph set may be determined according to the foregoing method.

For example, the network device extracts three fault propagation conditions, which are respectively a fault propagation condition 1, a fault propagation condition 2, and a fault propagation condition 3. Alarm occurrence time at a start point of the fault propagation condition 1 is 10:20:21, and alarm occurrence time at an end point of the fault propagation condition 1 is 10:21:00. In this case, fault propagation time corresponding to the fault propagation condition 1 is 39 seconds. Similarly, alarm occurrence time at a start point of the fault propagation condition 2 is 10:23:02, and alarm occurrence time at an end point of the fault propagation condition 2 is 10:24:20. In this case, fault propagation time corresponding to the fault propagation condition 2 is 1 minute and 18 seconds. Alarm occurrence time at a start point of the fault propagation condition 3 is 10:22:10, and alarm occurrence time at an end point of the fault propagation condition 3 is 10:22:59. In this case, fault propagation time corresponding to the fault propagation condition 3 is 49 seconds.

In some embodiments, an implementation process in which the network device determines the occurrence probability of the fault propagation condition may be: The network device determines a quantity of updated subgraphs in which a first fault propagation condition occurs in a first subgraph set, where the first fault propagation condition is a fault propagation condition extracted from the first subgraph set, and the plurality of subgraph sets include the first subgraph set. The network device determines an occurrence probability of the first fault propagation condition based on a ratio of the determined quantity to a total quantity of updated subgraphs in the first subgraph set.

The first subgraph set is one of the plurality of subgraph sets, and the first fault propagation condition is a fault propagation condition extracted from the first subgraph set. Therefore, an occurrence probability of each fault propagation condition extracted from each subgraph set may be determined according to the foregoing method.

In an example, the network device may directly determine the ratio of the determined quantity to the total quantity of updated subgraphs in the first subgraph set as the occurrence probability of the first fault propagation condition.

For example, the network device extracts a fault propagation condition 1 from the first subgraph set, a quantity of updated subgraphs in which the fault propagation condition 1 occurs in the first subgraph set is 20, and the total quantity of updated subgraphs in the first subgraph set is 30. In this case, an occurrence probability of the fault propagation condition 1 may be 67%.

In some other embodiments, the network device may determine a quantity of times that a first fault propagation condition occurs in the plurality of updated subgraphs, to obtain a first quantity of times, where the extracted fault propagation condition includes the first fault propagation condition; determine a quantity of times that a connection relationship between a start point of the first fault propagation condition and a second event occurs in the plurality of updated subgraphs, to obtain a second quantity of times, where the fault-related event includes the second event, and the second event is an event corresponding to the first fault propagation condition; and determine an occurrence probability of the first fault propagation condition based on a ratio of the first quantity of times to the second quantity of times.

It should be noted that the start point of the first fault propagation condition may be connected to a plurality of events, that is, the start point of the first fault propagation condition is an object that generates the plurality of events. However, in the event-object connection graph or the updated subgraph, objects related to the plurality of events may not be completely the same. In this case, different end points may be reached from the start point of the first fault propagation condition through different paths. However, each path corresponds to one fault propagation condition and also corresponds to one event. Therefore, the first fault propagation condition corresponds to one event, and the event corresponding to the first fault propagation condition may be an event generated at the start point of the first fault propagation condition.

In an example, the network device may directly determine the ratio of the first quantity of times to the second quantity of times as the occurrence probability of the first fault propagation condition.

In this embodiment of this application, the network device may extract the fault propagation condition by using the plurality of event-object connection graphs that are in the one-to-one correspondence with the different time, without manually summarizing the fault propagation condition, so that labor costs can be reduced, and efficiency of extracting the fault propagation condition can be improved. Moreover, faults that occur in the communications network at the different time may basically cover all fault types. Therefore, it is ensured that the extracted fault propagation condition has a relatively high fault coverage rate, and the method is reproducible and extensible, and can be widely applied.

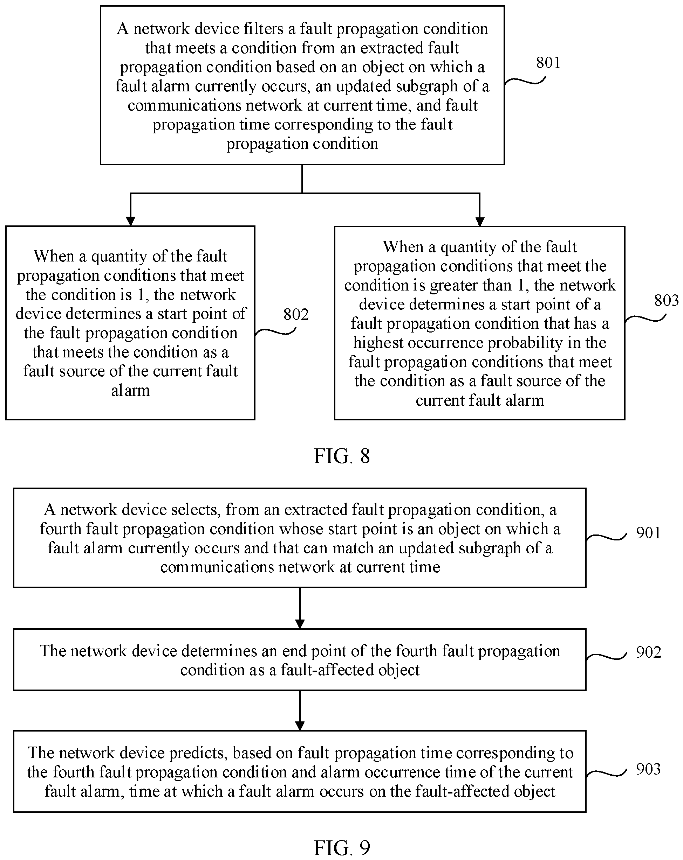

FIG. 8 is a flowchart of a fault source determining method according to an embodiment of this application. The method includes the following steps.

The fault source determining method provided in this embodiment of this application may be implemented based on the embodiment shown in FIG. 4. To be specific, after a network device extracts a fault propagation condition and determines an occurrence probability of the fault propagation condition and fault propagation time corresponding to the fault propagation condition according to the embodiment shown in FIG. 4, the network device may determine a fault source according to the following method including step 801 to step 803.

Step 801: The network device filters a fault propagation condition that meets a condition from the extracted fault propagation condition based on an object on which a fault alarm currently occurs, an updated subgraph of a communications network at current time, and the fault propagation time corresponding to the fault propagation condition.

In some embodiments, the network device may determine, according to the following steps (1) to (4), the fault propagation condition that meets the condition.
(1) Select, from the extracted fault propagation condition, a second fault propagation condition whose end point is the object on which the fault alarm currently occurs and that can match the updated subgraph of the communications network at the current time.

In an example, the network device may select, from the extracted fault propagation condition, a fault propagation condition whose end point is the object on which the fault alarm currently occurs; and filter, from the selected fault propagation condition, a fault propagation condition in which an indicated path exists in the updated subgraph of the communications network at the current time, and use the obtained fault propagation condition as the second fault propagation condition whose end point is the object on which the fault alarm currently occurs and that can match the updated subgraph of the communications network at the current time.

Based on the description in step 401, the communications network may correspond to different event-object connection graphs at different time. Therefore, the network device may determine the updated subgraph of the communications network at the current time based on an event-object connection graph of the communications network at the current time. To be specific, when determining the fault source, the network device may determine the event-object connection graph of the communications network at the current time; determine a subgraph at the current time based on the event-object connection graph of the communications network at the current time; and update an object in the subgraph at the current time to a corresponding object type based on a correspondence between an object and an object type, to obtain the updated subgraph of the communications network at the current time.

(2) Select, from the second fault propagation condition based on the updated subgraph of the communications network at the current time, a third fault propagation condition with a start point at which a fault alarm occurs before the current time.

Based on the foregoing description, an alarm object in an event-object connection graph carries alarm occurrence time. Therefore, after an updated subgraph is obtained, the alarm occurrence time may alternatively be determined from the updated subgraph. Therefore, in some embodiments, the network device may search the updated subgraph of the communications network at the current time for whether a start point of the second fault propagation condition carries alarm occurrence time, and determine the second fault propagation condition whose start point carries the alarm occurrence time as the third fault propagation condition.

(3) Determine, based on the updated subgraph of the communications network at the current time, current alarm propagation time corresponding to the third fault propagation condition, where the current alarm propagation time is a difference between alarm occurrence time at the start point of the third fault propagation condition and alarm occurrence time of the current fault alarm, and the alarm occurrence time at the start point of the third fault propagation condition is determined from the updated subgraph of the communications network at the current time.

(4) Select, from the third fault propagation condition, a fault propagation condition in which a difference between current corresponding alarm propagation time and the fault propagation time is less than a time threshold, and use the selected fault propagation condition as the fault propagation condition that meets the condition.

When the difference between the current alarm propagation time corresponding to the third fault propagation condition and the fault propagation time is less than the time threshold, it may indicate that there is a relatively high probability that the current fault alarm is the same as the fault alarm corresponding to the third fault propagation condition. Therefore, the selected fault propagation condition may be used as the fault propagation condition that meets the condition.

It should be noted that the time threshold may be set based on a use requirement, for example, 2 seconds. This is not limited in this embodiment of this application.

Step 802: When a quantity of the fault propagation conditions that meet the condition is 1, the network device determines a start point of the fault propagation condition that meets the condition as a fault source of the current fault alarm.

Step 803: When a quantity of the fault propagation conditions that meet the condition is greater than 1, the network device determines a start point of a fault propagation condition that has a highest occurrence probability in the fault propagation conditions that meet the condition as a fault source of the current fault alarm.

Each fault propagation condition corresponds to one probability, and generally, there is only one fault source. Therefore, when the quantity of the fault propagation conditions that meet the condition is greater than 1, the fault propagation condition that has the highest probability may be selected from the fault propagation conditions that meet the condition, and the start point of the fault propagation condition that has the highest probability may be determined as the fault source of the current fault alarm.

In step 801 to step 804, the fault propagation condition that meets the condition is first determined based on the fault propagation time, and then the fault source of the current fault alarm is determined based on the probability. Certainly, the fault propagation condition that meets the condition may alternatively be first determined based on the probability, and then the fault source of the current fault alarm is determined based on the fault propagation time. To be specific, the network device selects, from the extracted fault propagation condition, the second fault propagation condition whose end point is the object on which the fault alarm currently occurs and that can match the updated subgraph of the communications network at the current time; selects, from the second fault propagation condition based on the updated subgraph of the communications network at the current time, the third fault propagation condition with the start point at which the fault alarm occurs before the current time; and selects a fault propagation condition whose probability is greater than a probability threshold from the third fault propagation condition, and uses the selected fault propagation condition as the fault propagation condition that meets the condition. When the quantity of the fault propagation conditions that meet the condition is 1, the network device determines the start point of the fault propagation condition that meets the condition as the fault source of the current fault alarm. When the quantity of the fault propagation conditions that meet the condition is greater than 1, the network device determines, based on the updated subgraph of the communications network at the current time, current alarm propagation time corresponding to the fault propagation condition that meets the condition; and determines a start point of a fault propagation condition in which a difference between the corresponding current alarm propagation time and the fault propagation time is smallest in the fault propagation conditions that meet the condition as the fault source of the current fault alarm.

It should be noted that, for an implementation process of each step in a process of first determining, based on the probability, the fault propagation condition that meets the condition, and then determining the fault source based on the fault propagation time, refer to related content in step 801 to step 803. This is not limited in this embodiment of this application.

Regardless of whether the fault source of the current fault alarm is first determined based on the fault propagation time and then based on the probability or the fault source of the current fault alarm is first determined based on the probability and then based on the fault propagation time, after extracting the fault propagation condition, the network device needs to determine both the occurrence probability and the corresponding fault propagation time of the fault propagation condition. However, based on the description in step 404, it can be learned that the network device may alternatively determine only the fault propagation time corresponding to the fault propagation condition, or determine only the occurrence probability of the fault propagation condition. In this case, the network device may determine the fault source of the current fault alarm only based on the fault propagation time, or determine the fault source of the current fault alarm only based on the probability.

An implementation process in which the network device determines the fault source of the current fault alarm only based on the fault propagation time may be: The second fault propagation condition whose end point is the object on which the fault alarm currently occurs and that can match the updated subgraph of the communications network at the current time is selected from the extracted fault propagation condition. The third fault propagation condition with the start point at which the fault alarm occurs before the current time is selected from the second fault propagation condition based on the updated subgraph of the communications network at the current time. The current alarm propagation time corresponding to the third fault propagation condition is determined based on the updated subgraph of the communications network at the current time. The fault propagation condition in which the difference between the corresponding current alarm propagation time and the fault propagation time is less than the time threshold is selected from the third fault propagation condition, and the selected fault propagation condition is used as the fault propagation condition that meets the condition. When the quantity of the fault propagation conditions that meet the condition is 1, the network device determines the start point of the fault propagation condition that meets the condition as the fault source of the current fault alarm. When the quantity of the fault propagation conditions that meet the condition is greater than 1, the network device determines the start point of the fault propagation condition in which the difference between the corresponding current alarm propagation time and the fault propagation time is smallest in the fault propagation conditions that meet the condition as the fault source of the current fault alarm.

An implementation process in which the network device determines the fault source of the current fault alarm only based on the probability may be: The second fault propagation condition whose end point is the object on which the fault alarm currently occurs and that can match the updated subgraph of the communications network at the current time is selected from the extracted fault propagation condition. The third fault propagation condition with the start point at which the fault alarm occurs before the current time is selected from the second fault propagation condition based on the updated subgraph of the communications network at the current time. The current alarm propagation time corresponding to the third fault propagation condition is determined based on the updated subgraph of the communications network at the current time. The fault propagation condition whose probability is greater than the probability threshold is selected from the third fault propagation condition, and the selected fault propagation condition is used as the fault propagation condition that meets the condition. When the quantity of the fault propagation conditions that meet the condition is 1, the network device determines the start point of the fault propagation condition that meets the condition as the fault source of the current fault alarm. When the quantity of the fault propagation conditions that meet the condition is greater than 1, the network device determines the start point of the fault propagation condition that has the highest probability in the fault propagation conditions that meet the condition as the fault source of the current fault alarm.

In this embodiment of this application, the fault propagation condition is extracted based on a plurality of event-object connection graphs that are in a one-to-one correspondence with different time. Therefore, accuracy of the extracted fault propagation condition can be ensured, and accuracy of the fault source determined based on the extracted fault propagation condition can be ensured. Moreover, because the extracted fault propagation condition has a relatively high fault coverage rate, a probability that the fault source can be determined based on the extracted fault propagation condition is also relatively high.

FIG. 9 is a flowchart of a fault propagation range prediction method according to an embodiment of this application. The method is used to predict a fault-affected object based on an object on which a fault alarm currently occurs, an updated subgraph of a communications network at a current time, and an extracted fault propagation condition. The fault-affected object is an object on which a fault alarm occurs due to impact of the current fault alarm. The method includes the following several steps.

Step 901: The network device selects, from the extracted fault propagation condition, a fourth fault propagation condition whose start point is the object on which the fault alarm currently occurs and that can match the updated subgraph of the communications network at the current time.

In an example, the network device may select, from the extracted fault propagation condition, a fault propagation condition whose start point is the object on which the fault alarm currently occurs; and filter, from the selected fault propagation condition, a fault propagation condition in which an indicated path exists in the updated subgraph of the communications network at the current time, and use the obtained fault propagation condition as a fourth fault propagation condition whose start point is the object on which the fault alarm currently occurs and that can match the updated subgraph of the communications network at the current time.

Based on the description in step 401, the communications network may correspond to different event-object connection graphs at different time. Therefore, the network device may determine the updated subgraph of the communications network at the current time based on an event-object connection graph of the communications network at the current time. To be specific, when determining a fault source, the network device may determine the event-object connection graph of the communications network at the current time; determine a subgraph at the current time based on the event-object connection graph of the communications network at the current time; and update an object in the subgraph at the current time to a corresponding object type based on a correspondence between an object and an object type, to obtain the updated subgraph of the communications network at the current time.

Step 902: The network device determines an end point of the fourth fault propagation condition as the fault-affected object.

Step 903: The network device predicts, based on fault propagation time corresponding to the fourth fault propagation condition and alarm occurrence time of the current fault alarm, time at which the fault alarm occurs on the fault-affected object.

Because fault propagation time is a difference between alarm occurrence time at a start point and alarm occurrence time at an end point of a fault propagation condition, after the fault-affected object is predicted, the time at which the fault alarm occurs on the fault-affected object based on the fault propagation time corresponding to the fourth fault propagation condition and the alarm occurrence time of the current fault alarm.

In an example, a sum of the alarm occurrence time of the current fault alarm and the fault propagation time corresponding to the fourth fault propagation condition may be determined as the time at which the fault alarm occurs on the fault-affected object.

In this embodiment of this application, the fault propagation condition is extracted based on a plurality of event-object connection graphs that are in a one-to-one correspondence with different time. Therefore, accuracy of the extracted fault propagation condition can be ensured, and accuracy of predicting a fault propagation range based on the extracted fault propagation condition can be ensured. Moreover, because the extracted fault propagation condition has a relatively high fault coverage rate, a probability that the fault propagation range can be determined based on the extracted fault propagation condition is also relatively high.

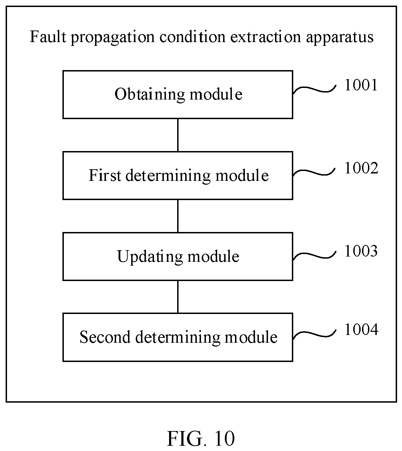

FIG. 10 is a schematic diagram of a structure of a fault propagation condition extraction apparatus according to an embodiment of this application. The apparatus may be implemented as a part or all of a network device by using software, hardware, or a combination of software and hardware. The network device may be the network device described in content in FIG. 1. The apparatus includes an obtaining module 1001, a first determining module 1002, an updating module 1003, and a second determining module 1004.

The obtaining module 1001 is configured to perform an operation in step 401 in the embodiment shown in FIG. 4.

The first determining module 1002 is configured to perform an operation in step 402 in the embodiment shown in FIG. 4.

The updating module 1003 is configured to perform an operation in step 403 in the embodiment shown in FIG. 4.

The second determining module 1004 is configured to perform an operation in step 404 in the embodiment shown in FIG. 4.

Optionally, the second determining module 1004 includes:
a conversion submodule, configured to separately convert a plurality of updated subgraphs into graph embedding vectors based on a graph embedding algorithm, to obtain a plurality of graph embedding vectors that are in a one-to-one correspondence with the plurality of updated subgraphs;
a first determining submodule, configured to determine a plurality of subgraph sets based on the plurality of graph embedding vectors and a clustering algorithm, where each of the plurality of subgraph sets includes at least one of the plurality of updated subgraphs; and
a first extraction submodule, configured to extract, based on a frequent subgraph mining algorithm, a fault propagation condition from the updated subgraph included in each of the plurality of subgraph sets.

Optionally, the first determining submodule is configured to:
determine a similarity between every two of the plurality of graph embedding vectors; and
cluster the plurality of updated subgraphs based on the similarity and the clustering algorithm, to obtain the plurality of subgraph sets.

Optionally, the second determining module 1004 includes:
a second extraction submodule, configured to extract the fault propagation condition from the plurality of updated subgraphs based on the frequent subgraph mining algorithm.

Optionally, the apparatus further includes:
a third determining module, configured to determine fault propagation time corresponding to the fault propagation condition;
a filtering module, configured to filter a fault propagation condition that meets a condition from the fault propagation condition based on an object on which a fault alarm currently occurs, an updated subgraph of the communications network at current time, and the fault propagation time corresponding to the fault propagation condition; and
a fourth determining module, configured to: when a quantity of the fault propagation conditions that meet the condition is 1, determine a start point of the fault propagation condition that meets the condition as a fault source of the current fault alarm.

Optionally, the third determining module includes:
a second determining submodule, configured to determine alarm occurrence time at a start point and alarm occurrence time at an end point of a first fault propagation condition, where the first fault propagation condition is a fault propagation condition extracted from a first subgraph set, and the plurality of subgraph sets include the first subgraph set; and
a third determining submodule, configured to determine a difference between the alarm occurrence time at the start point and the alarm occurrence time at the end point of the first fault propagation condition as fault propagation time corresponding to the first fault propagation condition.

Optionally, the filtering module includes:
a first selection submodule, configured to select, from the fault propagation condition, a second fault propagation condition whose end point is the object on which the fault alarm currently occurs and that can match the updated subgraph of the communications network at the current time;
a second selection submodule, configured to select, from the second fault propagation condition based on the updated subgraph of the communications network at the current time, a third fault propagation condition with a start point at which a fault alarm occurs before the current time;
a fourth determining submodule, configured to determine, based on the updated subgraph of the communications network at the current time, current alarm propagation time corresponding to the third fault propagation condition, where the current alarm propagation time is a difference between alarm occurrence time at the start point of the third fault propagation condition and alarm occurrence time of the current fault alarm, and the alarm occurrence time at the start point of the third fault propagation condition is determined from the updated subgraph of the communications network at the current time; and
a third selection submodule, configured to: select, from the third fault propagation condition, a fault propagation condition in which a difference between the corresponding current alarm propagation time and the fault propagation time is less than a time threshold; and use the selected fault propagation condition as the fault propagation condition that meets the condition.

Optionally, the apparatus further includes:
a fifth determining module, configured to determine an occurrence probability of the fault propagation condition; and
a sixth determining module, configured to: when a quantity of the fault propagation conditions that meet the condition is greater than 1, determine a start point of a fault propagation condition that has a highest occurrence probability in the fault propagation conditions that meet the condition as a fault source of the current fault alarm.

Optionally, the fault propagation condition is extracted based on the frequent subgraph mining algorithm from the updated subgraph included in each of the plurality of subgraph sets.

The fifth determining module includes:
a fifth determining submodule, configured to determine a quantity of updated subgraphs in which a first fault propagation condition occurs in a first subgraph set, where the first fault propagation condition is a fault propagation condition extracted from the first subgraph set, and the plurality of subgraph sets include the first subgraph set; and
a sixth determining submodule, configured to determine an occurrence probability of the first fault propagation condition based on a ratio of the quantity to a total quantity of updated subgraphs in the first subgraph set.

Optionally, the fifth determining module includes:
a seventh determining submodule, configured to determine a quantity of times that a first fault propagation condition occurs in the plurality of updated subgraphs, to obtain a first quantity of times, where the fault propagation condition includes the first fault propagation condition;
an eighth determining submodule, configured to determine a quantity of times that a connection relationship between a start point of the first fault propagation condition and a second event occurs in the plurality of updated subgraphs, to obtain a second quantity of times, where the fault-related event includes the second event, and the second event is an event corresponding to the first fault propagation condition; and
a ninth determining submodule, configured to determine an occurrence probability of the first fault propagation condition based on a ratio of the first quantity of times to the second quantity of times.

Optionally, the apparatus further includes:
a first prediction module, configured to predict a fault-affected object based on the object on which the fault alarm currently occurs, the updated subgraph of the communications network at the current time, and the fault propagation condition, where the fault-affected object is an object on which a fault alarm occurs due to impact of the current fault alarm.

Optionally, the first prediction module includes:
a fourth selection submodule, configured to select, from the fault propagation condition, a fourth fault propagation condition whose start point is the object on which the fault alarm currently occurs and that can match the updated subgraph of the communications network at the current time; and
a seventh determining submodule, configured to determine an end point of the fourth fault propagation condition as the fault-affected object.

Optionally, the apparatus further includes:
a seventh determining module, configured to determine the fault propagation time corresponding to the fault propagation condition; and
a second prediction module, configured to predict, based on fault propagation time corresponding to the fourth fault propagation condition and the alarm occurrence time of the current fault alarm, time at which the fault alarm occurs on the fault-affected object.

In this embodiment of this application, the fault propagation condition may be extracted by using the plurality of event-object connection graphs that are in the one-to-one correspondence with the different time, and the fault propagation condition does not need to be manually summarized, so that labor costs can be reduced, and efficiency of extracting the fault propagation condition can be improved. Moreover, faults that occur in the communications network at the different time may basically cover all fault types. Therefore, it is ensured that the extracted fault propagation condition has a relatively high fault coverage rate, and the method is reproducible and extensible, and can be widely applied.

It should be noted that, when the fault propagation condition extraction apparatus provided in the foregoing embodiment extracts the fault propagation condition, division into the foregoing function modules is merely used as an example for description. In actual application, the foregoing functions may be allocated to different function modules and implemented based on a requirement. In other words, an internal structure of the apparatus is divided into different function modules to implement all or some of the functions described above. In addition, the fault propagation condition extraction apparatus provided in the foregoing embodiment and the embodiment of the fault propagation condition extraction method belong to a same concept. For details about a specific implementation process of the fault propagation condition extraction apparatus, refer to the method embodiment. Details are not described herein again.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedures or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (DVD)), a semiconductor medium (for example, a solid-state drive (SSD)), or the like. It should be noted that the computer-readable storage medium mentioned in this application may be a non-volatile storage medium. In other words, the computer-readable storage medium may be a non-transitory storage medium.

It should be understood that "a plurality of" in this specification means two or more than two. In descriptions of this application, "/" means "or" unless otherwise specified. For example, A/B may represent A or B. In this specification, "and/or" describes only an association for describing associated objects and represents that three relationships may exist. For example, A and/or B may represent the following three cases: Only A exists, both A and B exist, and only B exists. In addition, to clearly describe the technical solutions in the embodiments of this application, terms such as "first" and "second" are used in the embodiments of this application to distinguish between same items or similar items whose functions and purposes are basically the same. A person skilled in the art may understand that the terms such as "first" and "second" do not limit a quantity and an execution sequence, and the terms such as "first" and "second" do not indicate a definite difference.

## Claims

1. A fault propagation condition extraction method, wherein the method comprises:
obtaining (401), by a network device at different time, a plurality of event-object connection graphs corresponding to a communications network, wherein the different time is in a one-to-one correspondence with the plurality of event-object connection graphs, and each of the plurality of event-object connection graphs is used to describe a fault-related event that occurs in the communications network and a connection relationship between objects related to the event;
determining (402), by the network device, a plurality of subgraphs based on the plurality of event-object connection graphs, wherein the plurality of subgraphs are in a one-to-one correspondence with the plurality of event-object connection graphs, and
wherein each of the plurality of subgraphs is a subset of a corresponding event-object connection graph, and
wherein, in each of the plurality of subgraphs, a quantity of hops between an object that generates a first event and any object related to the first event is not greater than N, and
wherein the event comprises the first event, and N is an integer greater than or equal to 1;
updating (403), by the network device, an object in each of the plurality of subgraphs to a corresponding object type based on a correspondence between an object and an object type, to obtain a plurality of updated subgraphs,
wherein, to obtain the plurality of updated subgraphs, the network device obtains from the correspondence, for each of the plurality of subgraphs, the object type corresponding to the object in the subgraph and replace the object in the subgraph with the corresponding object type, and
wherein the plurality of updated subgraphs are in a one-to-one correspondence with the plurality of subgraphs; and
determining (404), by the network device, a fault propagation condition based on the plurality of updated subgraphs, wherein the fault propagation condition is used to indicate a path through which a fault is propagated in the communications network, and wherein determining (404) the fault propagation condition comprises:
separately converting, by the network device, the plurality of updated subgraphs into graph embedding vectors based on a graph embedding algorithm, to obtain a plurality of graph embedding vectors that are in a one-to-one correspondence with the plurality of updated subgraphs;
determining, by the network device, a plurality of subgraph sets based on the plurality of graph embedding vectors and a clustering algorithm, wherein each of the plurality of subgraph sets comprises at least one of the plurality of updated subgraphs; and
extracting, by the network device based on a frequent subgraph mining algorithm, the fault propagation condition from the updated subgraph comprised in each of the plurality of subgraph sets.

2. The method according to claim 1, wherein the determining, by the network device, a plurality of subgraph sets based on the plurality of graph embedding vectors and a clustering algorithm comprises:
determining, by the network device, a similarity between every two of the plurality of graph embedding vectors; and
clustering, by the network device, the plurality of updated subgraphs based on the similarity and the clustering algorithm, to obtain the plurality of subgraph sets.

3. The method according to claim 1, wherein the determining (404), by the network device, a fault propagation condition based on the plurality of updated subgraphs comprises:
extracting, by the network device, the fault propagation condition from the plurality of updated subgraphs based on a frequent subgraph mining algorithm.

4. The method according to any one of the preceding claims, wherein after the determining (404), by the network device, a fault propagation condition based on the plurality of updated subgraphs, the method further comprises:
determining, by the network device, fault propagation time corresponding to the fault propagation condition, wherein determining the fault propagation time comprises:
determining, by the network device, alarm occurrence time at a start point and alarm occurrence time at an end point of a first fault propagation condition, wherein the first fault propagation condition is a fault propagation condition extracted from a first subgraph set, and the plurality of subgraph sets comprise the first subgraph set; and
determining, by the network device, a difference between the alarm occurrence time at the start point and the alarm occurrence time at the end point of the first fault propagation condition as fault propagation time corresponding to the first fault propagation condition; and
the method further comprises:
selecting, by the network device from the fault propagation condition, a second fault propagation condition whose end point is the object on which the fault alarm currently occurs and that can match the updated subgraph of the communications network at the current time;
selecting, by the network device from the second fault propagation condition based on the updated subgraph of the communications network at the current time, a third fault propagation condition with a start point at which a fault alarm occurs before the current time;
determining, by the network device based on the updated subgraph of the communications network at the current time, current alarm propagation time corresponding to the third fault propagation condition, wherein the current alarm propagation time is a difference between alarm occurrence time at the start point of the third fault propagation condition and alarm occurrence time of the current fault alarm, and the alarm occurrence time at the start point of the third fault propagation condition is determined from the updated subgraph of the communications network at the current time;
selecting, by the network device from the third fault propagation condition, a fault propagation condition in which a difference between the corresponding current alarm propagation time and the fault propagation time is less than a time threshold;; and
when a quantity of the fault propagation conditions is 1, determining, by the network device, a start point of the fault propagation condition as a fault source of the current fault alarm.

5. The method according to claim 4, wherein the method further comprises:
determining, by the network device, an occurrence probability of the fault propagation condition; and
when a quantity of the fault propagation conditions that meet the condition is greater than 1, determining, by the network device, a start point of a fault propagation condition that has a highest occurrence probability in the fault propagation conditions that meet the condition as a fault source of the current fault alarm.

6. The method according to claim 5, wherein the fault propagation condition is extracted by the network device based on the frequent subgraph mining algorithm from the updated subgraph comprised in each of the plurality of subgraph sets; and
the determining, by the network device, an occurrence probability of the fault propagation condition comprises:
determining, by the network device, a quantity of updated subgraphs in which a first fault propagation condition occurs in a first subgraph set, wherein the first fault propagation condition is a fault propagation condition extracted from the first subgraph set, and the plurality of subgraph sets comprise the first subgraph set; and
determining, by the network device, an occurrence probability of the first fault propagation condition based on a ratio of the quantity to a total quantity of updated subgraphs in the first subgraph set.

7. The method according to claim 5, wherein the determining, by the network device, an occurrence probability of the fault propagation condition comprises:
determining, by the network device, a quantity of times that a first fault propagation condition occurs in the plurality of updated subgraphs, to obtain a first quantity of times, wherein the fault propagation condition comprises the first fault propagation condition;
determining, by the network device, a quantity of times that a connection relationship between a start point of the first fault propagation condition and a second event occurs in the plurality of updated subgraphs, to obtain a second quantity of times, wherein the event comprises the second event, and the second event is an event corresponding to the first fault propagation condition; and
determining, by the network device, an occurrence probability of the first fault propagation condition based on a ratio of the first quantity of times to the second quantity of times.

8. The method according to any one of claims 1 to 7, wherein after the determining (404), by the network device, a fault propagation condition based on the plurality of updated subgraphs, the method further comprises:
predicting, by the network device, a fault-affected object based on the object on which the fault alarm currently occurs, the updated subgraph of the communications network at the current time, and the fault propagation condition, wherein the fault-affected object is an object on which a fault alarm occurs due to impact of the current fault alarm.

9. The method according to claim 8, wherein the predicting, by the network device, a fault-affected object based on the object on which the fault alarm currently occurs and the fault propagation condition comprises:
selecting, by the network device from the fault propagation condition, a fourth fault propagation condition whose start point is the object on which the fault alarm currently occurs and that can match the updated subgraph of the communications network at the current time; and
determining, by the network device, an end point of the fourth fault propagation condition as the fault-affected object.

10. The method according to claim 9, wherein the method further comprises:
determining, by the network device, the fault propagation time corresponding to the fault propagation condition; and
predicting, by the network device based on fault propagation time corresponding to the fourth fault propagation condition and the alarm occurrence time of the current fault alarm, time at which the fault alarm occurs on the fault-affected object.

11. A fault propagation condition extraction apparatus, wherein the apparatus comprises:
an obtaining module (1001), configured to obtain, at different time, a plurality of event-object connection graphs corresponding to a communications network, wherein the different time is in a one-to-one correspondence with the plurality of event-object connection graphs, and each of the plurality of event-object connection graphs is used to describe a fault-related event that occurs in the communications network and a connection relationship between objects related to the event;
a first determining module (1002), configured to determine a plurality of subgraphs based on the plurality of event-object connection graphs, wherein the plurality of subgraphs are in a one-to-one correspondence with the plurality of event-object connection graphs, and
wherein each of the plurality of subgraphs is a subset of a corresponding event-object connection graph, and
wherein, in each of the plurality of subgraphs, a quantity of hops between an object that generates a first even and any object related to the first event is not greater than N, the event comprises the first event, and N is an integer greater than or equal to 1;
an updating module (1003), configured to update an object in each of the plurality of subgraphs to a corresponding object type based on a correspondence between an object and an object type, to obtain a plurality of updated subgraphs, wherein to obtain the plurality of updated subgraphs, the updating module (1003) obtains from the correspondence, for each of the plurality of subgraphs, the object type corresponding to the object in the subgraph and replace the object in the subgraph with the corresponding object type, and wherein the plurality of updated subgraphs are in a one-to-one correspondence with the plurality of subgraphs; and
a second determining module (1004), configured to determine a fault propagation condition based on the plurality of updated subgraphs, wherein the fault propagation condition is used to indicate a path through which a fault is propagated in the communications network, and wherein the second determining module (1004) is configured to:
separately convert the plurality of updated subgraphs into graph embedding vectors based on a graph embedding algorithm, to obtain a plurality of graph embedding vectors that are in a one-to-one correspondence with the plurality of updated subgraphs;
determine a plurality of subgraph sets based on the plurality of graph embedding vectors and a clustering algorithm, wherein each of the plurality of subgraph sets comprises at least one of the plurality of updated subgraphs; and
extract, based on a frequent subgraph mining algorithm, the fault propagation condition from the updated subgraph comprised in each of the plurality of subgraph sets.

12. A network device, wherein the network device comprises a processor (301, 305) and a network interface (304), the network interface (304) is configured to obtain data used for implementing the method according to any one of claims 1 to 10, and the processor (301, 305) is configured to perform, based on the data obtained by the network interface, all the steps of the method according to any one of claims 1 to 10.

## Patentansprüche

1. Extraktionsverfahren einer Fehlerausbreitungsbedingung, wobei das Verfahren umfasst:
Erhalten (401), durch eine Netzwerkvorrichtung zu unterschiedlicher Zeit, einer Vielzahl von Ereignis-Objekt-Verbindungsgraphen, die einem Kommunikationsnetzwerk entspricht, wobei sich die unterschiedliche Zeit in einer Eins-zu-Eins-Entsprechung mit der Vielzahl von Ereignis-Objekt-Verbindungsgraphen befindet und jeder der Vielzahl von Ereignis-Objekt-Verbindungsgraphen verwendet wird, um ein fehlerbezogenes Ereignis, das in dem Kommunikationsnetzwerk auftritt, und eine Verbindungsbeziehung zwischen Objekten, die sich auf das Ereignis beziehen, zu beschreiben;
Bestimmen (402), durch die Netzwerkvorrichtung, einer Vielzahl von Teilgraphen basierend auf der Vielzahl von Ereignis-Objekt-Verbindungsgraphen, wobei sich die Vielzahl von Teilgraphen in einer Eins-zu-Eins-Entsprechung mit der Vielzahl von Ereignis-Objekt-Verbindungsgraphen befindet und
wobei jeder der Vielzahl von Teilgraphen ein Teilsatz eines entsprechenden Ereignis-Objekt-Verbindungsgraphen ist und
wobei, in jedem der Vielzahl von Teilgraphen, eine Anzahl von Hops zwischen einem Objekt, das ein erstes Ereignis erzeugt, und einem beliebigen Objekt, das sich auf das erste Ereignis bezieht, nicht größer als N ist und
wobei das Ereignis das erste Ereignis umfasst und N eine ganze Zahl größer als oder gleich 1 ist;
Aktualisieren (403), durch die Netzwerkvorrichtung, eines Objekts in jedem der Vielzahl von Teilgraphen auf eine entsprechende Objektart basierend auf einer Entsprechung zwischen einem Objekt und einer Objektart, um eine Vielzahl von aktualisierten Teilgraphen zu erhalten,
wobei, um die Vielzahl von aktualisierten Teilgraphen zu erhalten, die Netzwerkvorrichtung aus der Entsprechung, für jeden der Vielzahl von Teilgraphen, die Objektart, die dem Objekt in dem Teilgraphen entspricht, erhält und das Objekt in dem Teilgraphen mit der entsprechenden Objektart ersetzen und
wobei sich die Vielzahl von aktualisierten Teilgraphen in einer Eins-zu-Eins-Entsprechung mit der Vielzahl von Teilgraphen befindet; und
Bestimmen (404), durch die Netzwerkvorrichtung, einer Fehlerausbreitungsbedingung basierend auf der Vielzahl von aktualisierten Teilgraphen, wobei die Fehlerausbreitungsbedingung verwendet wird, um einen Pfad, über den ein Fehler in dem Kommunikationsnetzwerk ausgebreitet wird, anzugeben und wobei das Bestimmen (404) der Fehlerausbreitungsbedingung umfasst:
separates Umwandeln, durch die Netzwerkvorrichtung, der Vielzahl von aktualisierten Teilgraphen in Grapheneinbettungsvektoren basierend auf einem Grapheneinbettungsalgorithmus, um eine Vielzahl von Grapheneinbettungsvektoren, die sich in einer Eins-zu-Eins-Entsprechung mit der Vielzahl von aktualisierten Teilgraphen befindet, zu erhalten;
Bestimmen, durch die Netzwerkvorrichtung, einer Vielzahl von Teilgraphensätzen basierend auf der Vielzahl von Grapheneinbettungsvektoren und einem Clusteralgorithmus, wobei jeder der Vielzahl von Teilgraphensätzen mindestens einen der Vielzahl von aktualisierten Teilgraphen umfasst; und
Extrahieren, durch die Netzwerkvorrichtung basierend auf einem häufigen Teilgraphen-Mining-Algorithmus, der Fehlerausbreitungsbedingung aus dem aktualisierten Teilgraphen, der in jedem der Vielzahl von Teilgraphensätzen enthalten ist.

2. Verfahren nach Anspruch 1, wobei das Bestimmen, durch die Netzwerkvorrichtung, einer Vielzahl von Teilgraphensätzen basierend auf der Vielzahl von Grapheneinbettungsvektoren und einem Clusteralgorithmus umfasst:
Bestimmen, durch die Netzwerkvorrichtung, einer Ähnlichkeit zwischen jeweils zwei der Vielzahl von Grapheneinbettungsvektoren; und
Clustern, durch die Netzwerkvorrichtung, der Vielzahl von aktualisierten Teilgraphen basierend auf der Ähnlichkeit und dem Clusteralgorithmus, um die Vielzahl von Teilgraphensätzen zu erhalten.

3. Verfahren nach Anspruch 1, wobei das Bestimmen (404), durch die Netzwerkvorrichtung, einer Fehlerausbreitungsbedingung basierend auf der Vielzahl von aktualisierten Teilgraphen umfasst:
Extrahieren, durch die Netzwerkvorrichtung, der Fehlerausbreitungsbedingung aus der Vielzahl von aktualisierten Teilgraphen basierend auf einem häufigen Teilgraphen-Mining-Algorithmus.

4. Verfahren nach einem der vorstehenden Ansprüche, wobei, nach dem Bestimmen (404), durch die Netzwerkvorrichtung, einer Fehlerausbreitungsbedingung basierend auf der Vielzahl von aktualisierten Teilgraphen, das Verfahren ferner umfasst: Bestimmen, durch die Netzwerkvorrichtung, einer Fehlerausbreitungszeit, die der Fehlerausbreitungsbedingung entspricht, wobei das Bestimmen der Fehlerausbreitungszeit umfasst:
Bestimmen, durch die Netzwerkvorrichtung, einer Alarmauftrittszeit an einem Startpunkt und einer Alarmauftrittszeit an einem Endpunkt einer ersten Fehlerausbreitungsbedingung, wobei die erste Fehlerausbreitungsbedingung eine Fehlerausbreitungsbedingung, die aus einem ersten Teilgraphensatz extrahiert wird, ist und die Vielzahl von Teilgraphensätzen den ersten Teilgraphensatz umfasst; und
Bestimmen, durch die Netzwerkvorrichtung, eines Unterschieds zwischen der Alarmauftrittszeit an dem Startpunkt und der Alarmauftrittszeit an dem Endpunkt der ersten Fehlerausbreitungsbedingung als Fehlerausbreitungszeit, die der ersten Fehlerausbreitungsbedingung entspricht; und das Verfahren ferner umfasst:
Auswählen, durch die Netzwerkvorrichtung aus der Fehlerausbreitungsbedingung, einer zweiten Fehlerausbreitungsbedingung, deren Endpunkt das Objekt, auf dem der Fehleralarm aktuell auftritt, ist und die mit dem aktualisierten Teilgraphen des Kommunikationsnetzwerks zu der aktuellen Zeit übereinstimmen kann;
Auswählen, durch die Netzwerkvorrichtung aus der zweiten Fehlerausbreitungsbedingung basierend auf dem aktualisierten Teilgraphen des Kommunikationsnetzwerks zu der aktuellen Zeit, einer dritten Fehlerausbreitungsbedingung mit einem Startpunkt, an dem ein Fehleralarm vor der aktuellen Zeit auftritt;
Bestimmen, durch die Netzwerkvorrichtung basierend auf dem aktualisierten Teilgraphen des Kommunikationsnetzwerks zu der aktuellen Zeit, einer aktuellen Alarmausbreitungszeit, die der dritten Fehlerausbreitungsbedingung entspricht,
wobei die aktuelle Alarmausbreitungszeit ein Unterschied zwischen der Alarmauftrittszeit an dem Startpunkt der dritten Fehlerausbreitungsbedingung und der Alarmauftrittszeit des aktuellen Fehleralarms ist und die Alarmauftrittszeit an dem Startpunkt der dritten Fehlerausbreitungsbedingung aus dem aktualisierten Teilgraphen des Kommunikationsnetzwerks zu der aktuellen Zeit bestimmt wird;
Auswählen, durch die Netzwerkvorrichtung aus der dritten Fehlerausbreitungsbedingung, einer Fehlerausbreitungsbedingung, in der ein Unterschied zwischen der entsprechenden aktuellen Alarmausbreitungszeit und der Fehlerausbreitungszeit kleiner als ein Zeitschwellenwert ist; und
wenn eine Anzahl der Fehlerausbreitungsbedingungen 1 ist, Bestimmen, durch die Netzwerkvorrichtung, eines Startpunkts der Fehlerausbreitungsbedingung als eine Fehlerquelle des aktuellen Fehleralarms.

5. Verfahren nach Anspruch 4, wobei das Verfahren ferner umfasst:
Bestimmen, durch die Netzwerkvorrichtung, einer Auftrittswahrscheinlichkeit der Fehlerausbreitungsbedingung; und
wenn eine Anzahl der Fehlerausbreitungsbedingungen, die die Bedingung erfüllen, größer als 1 ist, Bestimmen, durch die Netzwerkvorrichtung, eines Startpunkts einer Fehlerausbreitungsbedingung, die eine höchste Auftrittswahrscheinlichkeit in den Fehlerausbreitungsbedingungen, die die Bedingung als eine Fehlerquelle des aktuellen Fehleralarms erfüllen, aufweist.

6. Verfahren nach Anspruch 5, wobei die Fehlerausbreitungsbedingung durch die Netzwerkvorrichtung basierend auf dem häufigen Teilgraphen-Mining-Algorithmus aus dem aktualisierten Teilgraphen, der in jeder der Vielzahl von Teilgraphensätzen enthalten ist, extrahiert wird; und
das Bestimmen, durch die Netzwerkvorrichtung, einer Auftrittswahrscheinlichkeit der Fehlerausbreitungsbedingung umfasst:
Bestimmen, durch die Netzwerkvorrichtung, einer Anzahl von aktualisierten Teilgraphen, in der eine erste Fehlerausbreitungsbedingung in einem ersten Teilgraphensatz auftritt, wobei die erste Fehlerausbreitungsbedingung eine Fehlerausbreitungsbedingung, die aus dem ersten Teilgraphensatz extrahiert wird, ist und die Vielzahl von Teilgraphensätzen den ersten Teilgraphensatz umfasst; und
Bestimmen, durch die Netzwerkvorrichtung, einer Auftrittswahrscheinlichkeit der ersten Fehlerausbreitungsbedingung basierend auf einem Verhältnis der Anzahl zu einer Gesamtanzahl von aktualisierten Teilgraphen in dem ersten Teilgraphensatz.

7. Verfahren nach Anspruch 5, wobei das Bestimmen, durch die Netzwerkvorrichtung, einer Auftrittswahrscheinlichkeit der Fehlerausbreitungsbedingung umfasst:
Bestimmen, durch die Netzwerkvorrichtung, einer Anzahl von Malen, die eine erste Fehlerausbreitungsbedingung in der Vielzahl von aktualisierten Teilgraphen auftritt, um eine erste Anzahl von Malen zu erhalten, wobei die
Fehlerausbreitungsbedingung die erste Fehlerausbreitungsbedingung umfasst;
Bestimmen, durch die Netzwerkvorrichtung, einer Anzahl von Malen, die eine Verbindungsbeziehung zwischen einem Startpunkt der ersten Fehlerausbreitungsbedingung und einem zweiten Ereignis in der Vielzahl von aktualisierten Teilgraphen auftritt, um eine zweite Anzahl von Malen zu erhalten,
wobei das Ereignis das zweite Ereignis umfasst und das zweite Ereignis ein Ereignis, das der ersten Fehlerausbreitungsbedingung entspricht, ist; und
Bestimmen, durch die Netzwerkvorrichtung, einer Auftrittswahrscheinlichkeit der ersten Fehlerausbreitungsbedingung basierend auf einem Verhältnis der ersten Anzahl von Malen zu der zweiten Anzahl von Malen.

8. Verfahren nach einem der Ansprüche 1 bis 7, wobei, nach dem Bestimmen (404), durch die Netzwerkvorrichtung, einer Fehlerausbreitungsbedingung basierend auf der Vielzahl von aktualisierten Teilgraphen, das Verfahren ferner umfasst:
Vorhersagen, durch die Netzwerkvorrichtung, eines fehlerbetroffenen Objekts basierend auf dem Objekt, auf dem der Fehleralarm aktuell auftritt, dem aktualisierten Teilgraphen des Kommunikationsnetzwerks zu der aktuellen Zeit und der Fehlerausbreitungsbedingung, wobei das fehlerbetroffene Objekt ein Objekt, auf dem ein Fehleralarm aufgrund einer Einwirkung des aktuellen Fehleralarms auftritt, ist.

9. Verfahren nach Anspruch 8, wobei das Vorhersagen, durch die Netzwerkvorrichtung, eines fehlerbetroffenen Objekts basierend auf dem Objekt, auf dem der Fehleralarm aktuell auftritt, und der Fehlerausbreitungsbedingung umfasst:
Auswählen, durch die Netzwerkvorrichtung aus der Fehlerausbreitungsbedingung, einer vierten Fehlerausbreitungsbedingung, deren Startpunkt das Objekt, auf dem der Fehleralarm aktuell auftritt, ist und die mit dem aktualisierten Teilgraphen des Kommunikationsnetzwerks zu der aktuellen Zeit übereinstimmen kann; und
Bestimmen, durch die Netzwerkvorrichtung, eines Endpunkts der vierten Fehlerausbreitungsbedingung als das fehlerbetroffene Objekt.

10. Verfahren nach Anspruch 9, wobei das Verfahren ferner umfasst:
Bestimmen, durch die Netzwerkvorrichtung, der Fehlerausbreitungszeit, die der Fehlerausbreitungsbedingung entspricht;
und
Vorhersagen, durch die Netzwerkvorrichtung basierend auf der Fehlerausbreitungszeit, die der vierten Fehlerausbreitungsbedingung entspricht, und der Alarmauftrittszeit des aktuellen Fehleralarms, einer Zeit, zu der der Fehleralarm auf dem fehlerbetroffenen Objekt auftritt.

11. Extraktionseinrichtung der Fehlerausbreitungsbedingung, wobei die Einrichtung umfasst:
ein Erhaltungsmodul (1001), das konfiguriert ist, um, zu unterschiedlicher Zeit, eine Vielzahl von Ereignis-Objekt-Verbindungsgraphen, die einem Kommunikationsnetzwerk entspricht, zu erhalten, wobei sich die unterschiedliche Zeit in einer Eins-zu-Eins-Entsprechung mit der Vielzahl von Ereignis-Objekt-Verbindungsgraphen befindet und jeder der Vielzahl von Ereignis-Objekt-Verbindungsgraphen verwendet wird, um ein fehlerbezogenes Ereignis, das in dem Kommunikationsnetzwerk auftritt, und eine Verbindungsbeziehung zwischen Objekten, die sich auf das Ereignis beziehen, zu beschreiben;
ein erstes Bestimmungsmodul (1002), das konfiguriert ist, um eine Vielzahl von Teilgraphen basierend auf der Vielzahl von Ereignis-Objekt-Verbindungsgraphen zu bestimmen, wobei sich die Vielzahl von Teilgraphen in einer Eins-zu-Eins-Entsprechung mit der Vielzahl von Ereignis-Objekt-Verbindungsgraphen befindet und
wobei jeder der Vielzahl von Teilgraphen ein Teilsatz eines entsprechenden Ereignis-Objekt-Verbindungsgraphen ist und
wobei, in jedem der Vielzahl von Teilgraphen, eine Anzahl von Hops zwischen einem Objekt, das ein erstes Ereignis erzeugt, und einem beliebigen Objekt, das sich auf das erste Ereignis bezieht, nicht größer als N ist, das Ereignis das erste Ereignis umfasst und N eine ganze Zahl größer als oder gleich 1 ist;
ein Aktualisierungsmodul (1003), das konfiguriert ist, um ein Objekt in jedem der Vielzahl von Teilgraphen auf eine entsprechende Objektart basierend auf einer Entsprechung zwischen einem Objekt und einer Objektart zu aktualisieren, um eine Vielzahl von aktualisierten Teilgraphen zu erhalten, wobei das Aktualisierungsmodul (1003) aus der Entsprechung, für jeden der Vielzahl von Teilgraphen, die Objektart, die dem Objekt in dem Teilgraphen entspricht, erhält und das Objekt in dem Teilgraphen mit der entsprechenden Objektart ersetzen und wobei sich die Vielzahl von aktualisierten Teilgraphen in einer Eins-zu-Eins-Entsprechung mit der Vielzahl von Teilgraphen befindet; und
ein zweites Bestimmungsmodul (1004), das konfiguriert ist, um eine Fehlerausbreitungsbedingung basierend auf der Vielzahl von aktualisierten Teilgraphen zu bestimmen, wobei die Fehlerausbreitungsbedingung verwendet wird, um einen Pfad, über den ein Fehler in dem Kommunikationsnetzwerk ausgebreitet wird, anzugeben und wobei das zweite Bestimmungsmodul (1004) konfiguriert ist zum:
separaten Umwandeln der Vielzahl von aktualisierten Teilgraphen in Grapheneinbettungsvektoren basierend auf einem Grapheneinbettungsalgorithmus, um eine Vielzahl von Grapheneinbettungsvektoren, die sich in einer Eins-zu-Eins-Entsprechung mit der Vielzahl von aktualisierten Teilgraphen befindet, zu erhalten;
Bestimmen einer Vielzahl von Teilgraphensätzen basierend auf der Vielzahl von Grapheneinbettungsvektoren und einem Clusteralgorithmus, wobei jeder der Vielzahl von Teilgraphensätzen mindestens einen der Vielzahl von aktualisierten Teilgraphen umfasst; und
Extrahieren, basierend auf einem häufigen Teilgraphen-Mining-Algorithmus, der Fehlerausbreitungsbedingung aus dem aktualisierten Teilgraphen, der in jedem der Vielzahl von Teilgraphensätzen enthalten ist.

12. Netzwerkvorrichtung, wobei die Netzwerkvorrichtung einen Prozessor (301, 305) und eine Netzwerkschnittstelle (304) umfasst, wobei die Netzwerkschnittstelle (304) konfiguriert ist, um Daten zum Implementieren des Verfahrens nach einem der Ansprüche 1 bis 10 zu erhalten und der Prozessor (301, 305) konfiguriert ist, um, basierend auf den Daten, die durch die Netzwerkschnittstelle erhalten werden, alle der Schritte des Verfahrens nach einem der Ansprüche 1 bis 10 durchzuführen.

## Revendications

1. Procédé d'extraction de condition de propagation de défaut, dans lequel le procédé comprend :
l'obtention (401), par un dispositif de réseau à un temps différent, d'une pluralité de graphes de liaison objet événement correspondant à un réseau de communications, dans lequel le temps différent est en correspondance biunivoque avec la pluralité de graphes de liaison objet événement, et chacun de la pluralité de graphes de liaison objet événement est utilisé pour décrire un événement lié à un défaut qui survient dans le réseau de communications et une relation de liaison entre des objets liés à l'événement ;
la détermination (402), par le dispositif de réseau, d'une pluralité de sous-graphes sur la base de la pluralité de graphes de liaison objet événement, dans lequel la pluralité de sous-graphes est en correspondance biunivoque avec la pluralité de graphes de liaison objet événement, et
dans lequel chacun de la pluralité de sous-graphes est un sous-ensemble d'un graphe de liaison objet événement correspondant, et
dans lequel, dans chacun de la pluralité de sous-graphes, une quantité de sauts entre un objet qui génère un premier événement et un objet quelconque lié au premier événement n'est pas supérieure à N, et
dans lequel l'événement comprend le premier événement, et N est un entier supérieur ou égal à 1 ;
la mise à jour (403), par le dispositif de réseau, d'un objet dans chacun de la pluralité de sous-graphes à un type d'objet correspondant sur la base d'une correspondance entre un objet et un type d'objet, pour obtenir une pluralité de sous-graphes mis à jour, dans lequel, pour obtenir la pluralité de sous-graphes mis à jour, le dispositif de réseau obtient à partir de la correspondance, pour chacun de la pluralité de sous-graphes, le type d'objet correspondant à l'objet dans le sous-graphe et remplace l'objet dans le sous-graphe avec le type d'objet correspondant, et
dans lequel la pluralité de sous-graphes mis à jour sont en correspondance biunivoque avec la pluralité de sous-graphes ; et
la détermination (404), par le dispositif de réseau, d'une condition de propagation de défaut sur la base de la pluralité de sous-graphes mis à jour, dans lequel la condition de propagation de défaut est utilisée pour indiquer un chemin à travers lequel un défaut est propagé dans le réseau de communications, et dans lequel la détermination (404) de la condition de propagation de défaut comprend :
la conversion de manière séparée, par le dispositif de réseau, de la pluralité de sous-graphes mis à jour en des vecteurs d'incorporation de graphe sur la base d'un algorithme d'incorporation de graphe, pour obtenir une pluralité de vecteurs d'incorporation de graphe qui sont en correspondance biunivoque avec la pluralité de sous-graphes mis à jour ;
la détermination, par le dispositif de réseau, d'une pluralité d'ensembles de sous-graphes sur la base de la pluralité de vecteurs d'incorporation de graphe et d'un algorithme de regroupement, dans lequel chacun de la pluralité d'ensembles de sous-graphes comprend au moins l'un parmi la pluralité de sous-graphes mis à jour ; et
l'extraction, par le dispositif de réseau sur la base d'un algorithme d'exploration de sous-graphe fréquent, de la condition de propagation de défaut à partir du sous-graphe mis à jour compris dans chacun de la pluralité d'ensembles de sous-graphes.

2. Procédé selon la revendication 1, dans lequel la détermination, par le dispositif de réseau, d'une pluralité d'ensembles de sous-graphes sur la base de la pluralité de vecteurs d'incorporation de graphe et d'un algorithme de regroupement comprend :
la détermination, par le dispositif de réseau, d'une similitude entre chaque paire de la pluralité de vecteurs d'incorporation de graphe ; et
le regroupement, par le dispositif de réseau, de la pluralité de sous-graphes mis à jour sur la base de la similitude et de l'algorithme de regroupement, pour obtenir la pluralité d'ensembles de sous-graphes.

3. Procédé selon la revendication 1, dans lequel la détermination (404), par le dispositif de réseau, d'une condition de propagation de défaut sur la base de la pluralité de sous-graphes mis à jour comprend :
l'extraction, par le dispositif de réseau, de la condition de propagation de défaut à partir de la pluralité de sous-graphes mis à jour sur la base d'un algorithme d'exploration de sous-graphe fréquent.

4. Procédé selon l'une quelconque des revendications précédentes, dans lequel, après la détermination (404), par le dispositif de réseau, d'une condition de propagation de défaut sur la base de la pluralité de sous-graphes mis à jour, le procédé comprend en outre :
la détermination, par le dispositif de réseau, d'un temps de propagation de défaut correspondant à la condition de propagation de défaut, dans lequel la détermination du temps de propagation de défaut comprend :
la détermination, par le dispositif de réseau, d'un temps de survenue d'alarme au niveau d'un point de départ et d'un temps de survenue d'alarme au niveau d'un point final d'une première condition de propagation de défaut, dans lequel la première condition de propagation de défaut est une condition de propagation de défaut extraite d'un premier ensemble de sous-graphes, et la pluralité d'ensembles de sous-graphes comprend le premier ensemble de sous-graphes ; et
la détermination, par le dispositif de réseau, d'une différence entre le temps de survenue d'alarme au niveau du point de départ et le temps de survenue d'alarme au niveau du point final de la première condition de propagation de défaut en tant que temps de propagation de défaut correspondant à la première condition de propagation de défaut ; et le procédé comprend en outre :
la sélection, par le dispositif de réseau de la condition de propagation de défaut, d'une deuxième condition de propagation de défaut dont le point final est l'objet sur lequel l'alarme de défaut survient actuellement et qui peut correspondre au sous-graphe mis à jour du réseau de communications au temps actuel ;
la sélection, par le dispositif de réseau de la deuxième condition de propagation de défaut sur la base du sous-graphe mis à jour du réseau de communications au temps actuel, d'une troisième condition de propagation de défaut avec un point de départ au niveau duquel une alarme de défaut survient avant le temps actuel ;
la détermination, par le dispositif de réseau sur la base du sous-graphe mis à jour du réseau de communications au temps actuel, d'un temps de propagation d'alarme actuel correspondant à la troisième condition de propagation de défaut, dans lequel le temps actuel de propagation d'alarme est une différence entre un temps de survenue d'alarme au niveau du point de départ de la troisième condition de propagation de défaut et un temps de survenue d'alarme de l'alarme de défaut actuelle, et le temps de survenue d'alarme au niveau du point de départ de la troisième condition de propagation de défaut est déterminé à partir du sous-graphe mis à jour du réseau de communications au temps actuel ;
la sélection, par le dispositif de réseau de la troisième condition de propagation de défaut, d'une condition de propagation de défaut dans laquelle une différence entre le temps de propagation d'alarme actuel correspondant et le temps de propagation de défaut est inférieur à un seuil de temps ; et
lorsqu'une quantité des conditions de propagation de défaut est 1, la détermination, par le dispositif de réseau, d'un point de départ de la condition de propagation de défaut en tant que source de défaut de l'alarme de défaut actuelle.

5. Procédé selon la revendication 4, dans lequel le procédé comprend en outre :
la détermination, par le dispositif de réseau, d'une probabilité de survenue de la condition de propagation de défaut ; et
lorsqu'une quantité des conditions de propagation de défaut qui satisfont la condition est supérieure à 1, la détermination, par le dispositif de réseau, d'un point de départ d'une condition de propagation de défaut qui a une probabilité de survenue la plus élevée dans les conditions de propagation de défaut qui satisfont la condition comme source de défaut de l'alarme de défaut actuelle.

6. Procédé selon la revendication 5, dans lequel la condition de propagation de défaut est extraite par le dispositif de réseau sur la base de l'algorithme d'exploration de sous-graphe fréquent du sous-graphe mis à jour compris dans chacun de la pluralité d'ensembles de sous-graphes ; et
la détermination, par le dispositif de réseau, d'une probabilité de survenue de la condition de propagation de défaut comprend :
la détermination, par le dispositif de réseau, d'une quantité de sous-graphes mis à jour dans lesquels une première condition de propagation de défaut survient dans un premier ensemble de sous-graphes, dans lequel la première condition de propagation de défaut est une condition de propagation de défaut extraite du premier ensemble de sous-graphes, et la pluralité d'ensembles de sous-graphes comprend le premier ensemble de sous-graphes ; et
la détermination, par le dispositif de réseau, d'une probabilité de survenue de la première condition de propagation de défaut sur la base d'un rapport de la quantité à une quantité totale de sous-graphes mis à jour dans le premier ensemble de sous-graphes.

7. Procédé selon la revendication 5, dans lequel la détermination, par le dispositif de réseau, d'une probabilité de survenue de la condition de propagation de défaut comprend :
la détermination, par le dispositif de réseau, d'une quantité de fois qu'une première condition de propagation de défaut survient dans la pluralité de sous-graphes mis à jour, pour obtenir une première quantité de fois, dans lequel la condition de propagation de défaut comprend la première condition de propagation de défaut ;
la détermination, par le dispositif de réseau, d'une quantité de fois qu'une relation de connexion entre un point de départ de la première condition de propagation de défaut et un second événement survient dans la pluralité de sous-graphes mis à jour, pour obtenir une seconde quantité de fois, dans lequel l'événement comprend le second événement, et le second événement est un événement correspondant à la première condition de propagation de défaut ; et
la détermination, par le dispositif de réseau, d'une probabilité de survenue de la première condition de propagation de défaut sur la base d'un rapport de la première quantité de fois à la seconde quantité de fois.

8. Procédé selon l'une quelconque des revendications 1 à 7, dans lequel après la détermination (404), par le dispositif de réseau, d'une condition de propagation de défaut sur la base de la pluralité de sous-graphes mis à jour, le procédé comprend en outre :
la prédiction, par le dispositif de réseau, d'un objet affecté par un défaut sur la base de l'objet sur lequel l'alarme de défaut survient actuellement, du sous-graphe mis à jour du réseau de communications du temps actuel, et de la condition de propagation de défaut, dans lequel l'objet affecté par défaut est un objet sur lequel une alarme de défaut survient en raison d'un impact de l'alarme de défaut actuelle.

9. Procédé selon la revendication 8, dans lequel la prédiction, par le dispositif de réseau, d'un objet affecté par un défaut sur la base de l'objet sur lequel l'alarme de défaut survient actuellement et de la condition de propagation de défaut comprend :
la sélection, par le dispositif de réseau de la condition de propagation de défaut, d'une quatrième condition de propagation de défaut dont le point de départ est l'objet sur lequel l'alarme de défaut survient actuellement et qui peut correspondre au sous-graphe mis à jour du réseau de communications au temps actuel ; et
la détermination, par le dispositif de réseau, d'un point final de la quatrième condition de propagation de défaut comme objet affecté par défaut.

10. Procédé selon la revendication 9, dans lequel le procédé comprend en outre :
la détermination, par le dispositif de réseau, du temps de propagation de défaut correspondant à la condition de propagation de défaut ;
et
la prédiction, par le dispositif de réseau sur la base d'un temps de propagation de défaut correspondant à la quatrième condition de propagation de défaut et au temps de survenue d'alarme de l'alarme de défaut actuelle, d'un temps au niveau duquel l'alarme de défaut survient sur l'objet affecté par défaut.

11. Appareil d'extraction de condition de propagation de défaut, dans lequel l'appareil comprend :
un module d'obtention (1001), configuré pour obtenir, au niveau d'un temps différent, une pluralité de graphes de liaison objet événement correspondant à un réseau de communications, dans lequel le temps différent est en correspondance biunivoque avec la pluralité de graphes de liaison objet événement, et chacun de la pluralité de graphes de liaison objet événement est utilisé pour décrire un événement lié à un défaut qui survient dans le réseau de communications et une relation de liaison entre des objets liés à l'événement ;
un premier module de détermination (1002), configuré pour déterminer une pluralité de sous-graphes sur la base de la pluralité de graphes de liaison objet événement, dans lequel la pluralité de sous-graphes est en correspondance biunivoque avec la pluralité de graphes de liaison objet événement, et
dans lequel chacun de la pluralité de sous-graphes est un sous-ensemble d'un graphe de liaison objet événement correspondant, et
dans lequel, dans chacun de la pluralité de sous-graphes, une quantité de sauts entre un objet qui génère un premier événement et un objet quelconque lié au premier événement n'est pas supérieure à N, l'événement comprend le premier événement, et N est un nombre entier supérieur ou égal à 1 ;
un module de mise à jour (1003), configuré pour mettre à jour un objet dans chacun de la pluralité de sous-graphes à un type d'objet correspondant sur la base d'une correspondance entre un objet et un type d'objet, pour obtenir une pluralité de sous-graphes mis à jour, dans lequel pour obtenir la pluralité de sous-graphes mis à jour, le module de mise à jour (1003) obtient à partir de la correspondance, pour chacun de la pluralité de sous-graphes, le type d'objet correspondant à l'objet dans le sous-graphe et remplace l'objet dans le sous-graphe par le type d'objet correspondant, et dans lequel la pluralité de sous-graphes mis à jour sont en correspondance biunivoque avec la pluralité de sous-graphes ; et
un second module de détermination (1004), configuré pour déterminer une condition de propagation de défaut sur la base de la pluralité de sous-graphes mis à jour, dans lequel la condition de propagation de défaut est utilisée pour indiquer un chemin à travers lequel un défaut est propagé dans le réseau de communications, et dans lequel le second module de détermination (1004) est configuré pour :
convertir séparément la pluralité de sous-graphes mis à jour en des vecteurs d'incorporation de graphes sur la base d'un algorithme d'incorporation de graphe, pour obtenir une pluralité de vecteurs d'incorporation de graphe qui sont en correspondance biunivoque avec la pluralité de sous-graphes mis à jour ;
déterminer une pluralité d'ensembles de sous-graphes sur la base de la pluralité de vecteurs d'incorporation de graphe et d'un algorithme de regroupement, dans lequel chacun de la pluralité d'ensembles de sous-graphes comprend au moins l'un parmi la pluralité de sous-graphes mis à jour ; et
extraire, sur la base d'un algorithme d'exploration de sous-graphe fréquent, la condition de propagation de défaut du sous-graphe mis à jour compris dans chacun de la pluralité d'ensembles de sous-graphes.

12. Dispositif de réseau, dans lequel le dispositif de réseau comprend un processeur (301, 305) et une interface réseau (304), l'interface réseau (304) est configurée pour obtenir des données utilisées pour mettre en oeuvre le procédé selon l'une quelconque des revendications 1 à 10, et le processeur (301, 305) est configuré pour effectuer, sur la base des données obtenues par l'interface réseau, toutes les étapes du procédé selon l'une quelconque des revendications 1 à 10.
